(19) Europäisches Patentamt European Patent Office Office européen des brevets

(11) **EP 2 883 183 B1**

(12) **EUROPEAN PATENT SPECIFICATION**

(45) Date of publication and mention
of the grant of the patent:
**08.03.2017 Bulletin 2017/10**

(21) Application number: **13762202.3**

(22) Date of filing: **08.08.2013**

(51) Int Cl.:
***G06F 21/36*** *(2013.01)*

(86) International application number:
**PCT/GB2013/052123**

(87) International publication number:
**WO 2014/023969 (13.02.2014 Gazette 2014/07)**

(54) **AUTHENTICATION METHOD AND SYSTEM**

AUTHENTIFIZIERUNGSVERFAHREN UND -SYSTEM

PROCÉDÉ ET SYSTÈME D'AUTHENTIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.08.2012 GB 201214200
08.08.2012 GB 201214201
08.08.2012 GB 201214202**

(43) Date of publication of application:
**17.06.2015 Bulletin 2015/25**

(73) Proprietor: **V-Auth Limited
London EC1V 5NR (GB)**

(72) Inventors:
• **BRITTAN, Steven Jonathan
Leddington, Dymock GL18 2EG (GB)**
• **OUDRHIRI, Radouane
London, SW11 5NR (GB)**

(74) Representative: **Vienne, Aymeric Charles Emile et
al
Mathys & Squire LLP
The Shard
32 London Bridge Street
London SE1 9SG (GB)**

(56) References cited:
**WO-A2-02/27442     US-A- 5 465 084**

**Description**

The present invention relates to authentication methods and systems and to parts thereof. The present invention also relates to a method and system of processing an authentication code and to parts thereof. The present invention also relates to two or three factor authentication method and apparatus and to parts thereof. The present invention relates particularly but not exclusively Matrix Pattern Authentication or equivalents or derivatives thereof. Certain aspects of the invention described may be applied to any form of secret information other than Matrix Pattern Authentication, where safeguarding the secret information is important; including passwords, passcodes, and personal information, including biometric information. The invention has particular although not exclusive relevance to personal authentication as an alternative to passwords and Personal Identification Numbers for computerized systems, embedded systems (e.g. for authentication/unlocking to computers and mobile devices), online identification or credit card payment, or any other authentication/unlocking process to any other device or process.

WO 02/27442 A2 discloses an authentication system in which the user places numbers, letters, symbols etc. in a prescribed order into cells of a displayed matrix.

Authentication is a process by which a user validates that they are legitimate, and may access, e.g. a secure service or transaction, protected by an authentication scheme. Matrix Pattern Authentication (MPA) is a generic term describing a form of known authentication which is an alternative to passwords and Personal Identification Numbers (PIN).

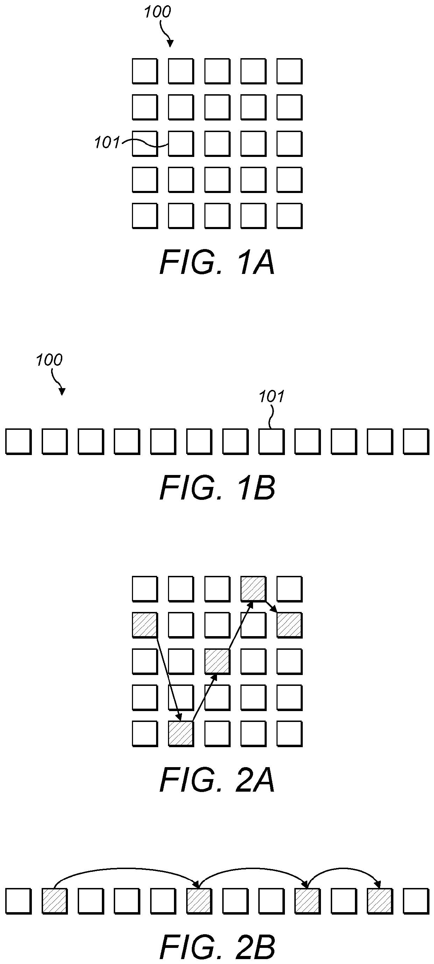

Figures 1A and 1B show matrices 100 used in a MPA, and comprising elements 101. In the case of Figure 1A, the matrix 100 is a square pattern of 25 elements 101, and in the case of Figure 1B, the matrix 100 is a line (i.e. a linear matrix) of 12 elements 101. Figures 2A and 2B show that each matrix 100 is a basic template which a human user employs in order to select a memorable identification pattern (MIP) shown as arrowed and colored. It should be understood that other sizes of matrices and other form factors are possible, depending on the level of security required, and how easy it needs to be for a human user to recall their MIP.

In the context of MPA, the term entropy refers to the degree of variability that a given MPA design will afford humans in their selection of their MIP. Thus a grid, say 25 elements in a 5x5 matrix as in Figure 1A, may be used. If a user was to select a MIP of five elements from the matrix, one could theoretically calculate that there would be 25^5 = 9,765,625 unique possible combinations for any individual MIP.

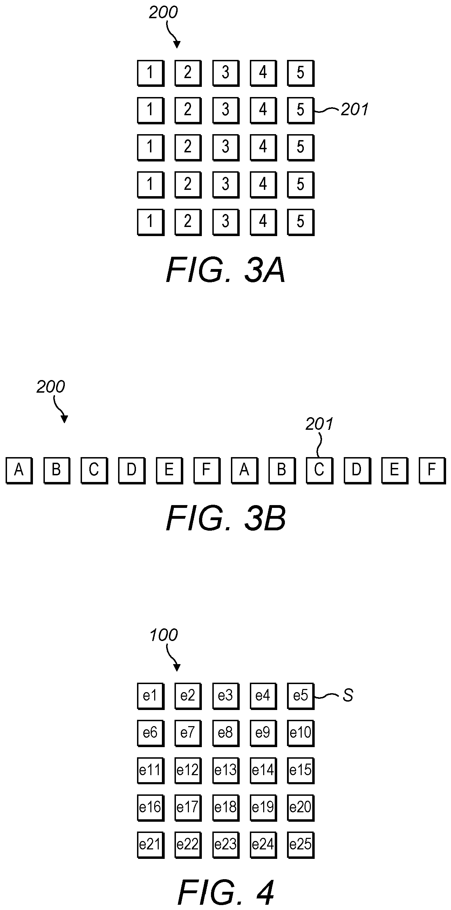

Figures 3A and 3B show that, in an authentication operation, a challenge matrix 200 is generated by an authentication system and presented to the user. The challenge matrix 200 is populated with a randomized set of signs, such as numbers, letters, or other logos. In the case of Figure 3A, the matrix 200 is a square pattern of 25 elements 201, with numbers 1, 2, 3, 4 and 5, and in the case of Figure 3B, the matrix 200 is a linear matrix of 12 elements 201, with letters A, B, C, D, E and F. The user then enters, in a dedicated space of an interface, separate from the matrix 200, the signs corresponding to their secret MIP and which appear in the matrix elements 201, in the correct order in which the signs appear in their MIP. In the case of Figure 3A, the user would enter the code "1, 2, 3, 4, 5", and in the case of Figure 3B, the user would enter the code "BFCE".

The MIP is only known to the user, and it is critical that the pattern is never divulged. For effective security, it is essential that the signs presented in a challenge matrix 200 for an authentication operation are in some way randomized at each authentication operation. Thus the code entered by the user has the desirable property that the code changes on each authentication operation - this is denoted by the term one-time code (OTC). Further, it is an essential feature of all matrix pattern authentication approaches that each sign in a matrix is repeated more than once, and preferably many times. This is to ensure that when a user enters their OTC, their secret MIP is not divulged. In the case of Figure 3A, with 25 elements, if each sign is repeated five times, each number entered by the user corresponds to five possible different positions in the matrix. Consequently, the code "1, 2, 3, 4, 5" corresponds to 3125 possible different patterns. In the case of Figure 3B, with the 12 element matrix, each letter corresponds to two possible positions in the matrix. Consequently, a four element code could represent 16 possible patterns. It is clear that the 25 element matrix, with a five element code and five unique signs is much more secure than the 12 element case.

Furthermore, any authentication system based upon a MIP keeps the pattern secret, in order to prevent hackers from gaining valuable information. Security of MPA technology is essential for their use, e.g. in any online system, especially in the case of financial transactions, access to personal data, etc. Consequently a method of storing sensitive information, particularly the user's MIP, must be employed.

The MIP is therefore usually encoded, in general by hashing. There are many public domain encoding algorithms available. The most appropriate algorithms employ a technique known as "one-way cryptographic hashing". This means that the sensitive information, in this case the MIP, once passed through a one-way hashing function, cannot be reversed. The sensitive information is encoded, and it is highly unlikely that anyone can retrieve the sensitive information. This means that even if a database with the encoded information is stolen, it would still be difficult to retrieve the sensitive information. Standard hashing algorithms (e.g. from the family SHA-2, such as SHA-256) and inclusion of at least one long salt should be applied to maximize the effectiveness of any encoding approach by hashing, and represents standard known best practice.

Typically, in MPA technology, each element 101 in the matrix 100 is given a unique symbol, in order to represent the position of the element 101 within the matrix 100. Figure 4 shows a numeric indexing approach which is often utilized. For example, in the case of the 25 element matrix 100 of Figure 1A, the elements might be numbered. In the example of Figure 2A, the MIP would be represented by the code "e6, e22, e13, e4, e10".

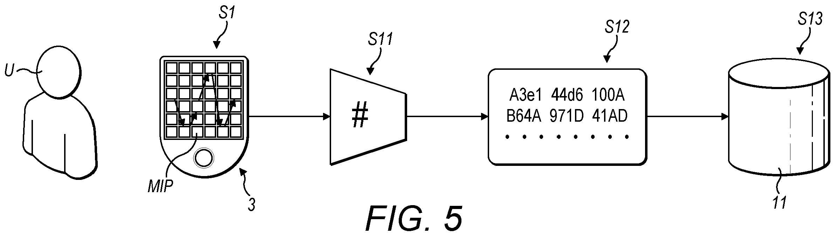

Figure 5 shows schematically that, in a known processing of the MIP, when a user U selects in S1 their MIP, once they have confirmed the selection, the code representing their pattern is usually encoded using a one-way hashing function, in S11, prior to being stored in S13 on a secure database 11, e.g. as a record. Preferably, the system will retain any non-coded record of the MIP in a volatile memory which will be immediately discarded after processing such as encoding. This has the desirable property that the only place where a not encoded record of the MIP is stored is in the user's mind.

The known MPA technology has however drawbacks or deficiencies.

Both the entropy of a five element MIP provided by a 5x5 matrix 100, as in Figure 1A (i.e. 9,765,625 possible MIPs), and the possible different patterns provided by a challenge matrix 200, as in Figure 3A (3125 possible different challenge patterns), may appear to be a lot.

However, the known MPA technology does not provide, in fact, enough entropy in order to allow people to select sufficiently different MIPs from one another. In large scale, i.e. with many users, insufficient entropy becomes a major problem, resulting in many instances of users selecting similar or identical patterns. This effect makes known MPA technology vulnerable to intelligent guessing by a hacker. This in fact is a known vulnerability of PIN based systems, and also password systems, which maybe easily guessed by applying certain, obvious combinations, such as dates.

Also the examples of Figures 2A and 2B are substantially less secure than a conventional four-digit PIN technology, because the probability of guessing a correct MIP from an OTC is higher than guessing a conventional four-digit PIN, i.e. higher than 1/10000 (with $10000=10^4$). They are therefore not desirable.

However, simply augmenting the length of the MIP is not a solution because a significant issue arises, as explained below.

Consider an example, with a six element MIP and a 36 element matrix 200 with six unique signs (i.e. 1, 2, 3, 4, 5 and 6), each repeated six times. An OTC entered by the user only ambiguously describes the MIP, as each digit of the OTC entered by the user represents six possible element positions on a challenge matrix 200. Therefore, in fact, any single six digit OTC describes 6^6 = 46,656 possible MIPs.

Only one of these is correct, but an authentication engine has no a priori knowledge as to which of these is the right one, because of the one-way hashing. An authentication engine needs therefore to generate all of the potentially-valid MIP combinations represented by the entered OTC and, in a similar manner as is explained in reference to Figure 5, each of these potentially-valid MIP combinations needs to be passed through the same encoding using the cryptographic one-way hashing function (as in S11), as the original MIP, prior to comparison with the encoded representation of the user's MIP stored in the database 11. Such repeated generations by encoding and comparisons need to continue until a match is found. It is only at this point that a positive authentication could be confirmed. The number of iterations required is random, albeit with a flat distribution. As a minimum, one iteration is required, as a maximum 46,656 iterations are required, in our example. Therefore on average 23,328 such iterations, comprising generation and comparison, will be required for a positive authentication.

An even more undesirable property of simply only augmenting the length of the MIP is that, in the case of an incorrect OTC being entered by the user, the authentication system always has to perform the maximum number of iterations, in order to ensure that all possible valid combinations are examined, before eventually actually rejecting the authentication request.

Whilst this processing overhead might be acceptable in any one individual authentication event, it is completely unacceptable in any multi-user implementation of a MPA system, of significant scale, as is typical. It is estimated that using the strong encoding algorithms that are necessary to defend against hackers (e.g. SHA-2), each individual encoding on an OTC takes between 0.1 ms and 1 ms on state of the art computer servers. Using 0.2ms as a representative processing speed, and continuing with our example, an average authentication request would take between 5 to 10 seconds to approve, in the case of a valid one-time code being entered. In the case of an incorrect OTC being entered, the time taken to produce a rejection of an authentication request will always be approximately 10 seconds (i.e. 46,656 x 0.2ms). In addition some secure system require to hash the MIP and/or password multiple times, which will further increase the processing time.

A further, significant problem is that this long processing time makes an authentication server acutely vulnerable to attack by bombardment of multiple authentication requests leading to a denial of service, which is a technique which is widely known to hackers.

Table 1 demonstrates how the number of iterations required for authentication increases geometrically with the number of elements (or length) of the MIP. In Table 1, a square form factor exemplary matrix 100 is used, for convenience. However, the same geometric increase in processing would be required for any form of MPA implementation or arrangement.

Table 1

| Number of elements in MIP matrix | Length of MIP | Number of unique signs in challenge matrix | Number of possible MIP for each OTC | Average / Max authentication time for a time of 0.2ms for each iteration (s) (rejection time=Max authentication time) |
|---|---|---|---|---|
| 36 (6x6) | 6 | 6 | 6^6 = 46,656 | 5/10 |
| 36 (6x6) | 7 | 6 | 7^6=117,649 | 12/24 |
| 49 (7x7) | 7 | 7 | 7^7 = 823,543 | 82/165 |
| 64 (8x8) | 8 | 8 | 8^8=16,777,216 | 16,68/3,355 |

Table 1 shows that MPA technology using six element MIP is practically unrealizable, although MPA technology with 5x5 matrices does not provide sufficient entropy, and MPA technology using five element MIP does not provide enough security compared to a 4-digit PIN.

Aspects of the invention address or at least ameliorate at least one of the above issues.

According to one aspect, the invention provides a method of authentication of a user, comprising the steps of:

obtaining an authentication code of a user, the authentication code comprising at least six elements based on a memorable identification pattern, MIP, associated with at least one authentication arrangement,
dividing the authentication code into at least two authentication segments each forming a subset of the elements of the authentication code;
encoding each of the authentication segments using a one-way hashing function;
storing the encoded authentication segments for use in a validation;
obtaining a challenge code from the user, the challenge code being based on a pattern associated with at least one challenge arrangement comprising duplicated signs,
dividing the challenge code into at least two portions, each corresponding to an authentication segments respectively;
generating candidate identification patterns corresponding to at least one portion of the challenge code;
encoding the candidate identification patterns using the one-way hashing function; and
validating the at least one portion of the challenge code if at least one encoded candidate identification pattern matches a corresponding encoded authentication segment; and
validating the challenge code only if each portion of the challenge code corresponding to an authentication segments is validated.

According to another aspect, the invention provides a method of storing an authentication code of a user in a system for authentication of a user, comprising the steps of:

obtaining an authentication code of a user, the authentication code comprising at least six elements based on a memorable identification pattern, MIP, associated with at least one authentication arrangement,
dividing the authentication code into at least two authentication segments each forming a subset of the elements of the authentication code;
encoding each of the authentication segments using a one-way hashing function;
storing the encoded authentication segments for use in a validation.

According to another aspect, the invention provides a method of authenticating a user using an authentication code of the user in a system for authentication of the user, comprising the steps of:

obtaining a challenge code from the user, the challenge code comprising at least six elements and being based on a pattern associated with at least one challenge arrangement comprising duplicated signs,
dividing the challenge code into at least two portions;
generating candidate identification patterns corresponding to at least one portion of the challenge code;
encoding the candidate identification patterns using the one-way hashing function; and
validating the at least one portion of the challenge code if at least one encoded candidate identification pattern matches a corresponding encoded authentication segment; and
validating the challenge code only if all the portions of the challenge code (OTC) are validated.

The authentication code may be divided into segments of N elements, with

$$4 \leq N \leq 5.$$

The challenge code may be divided into portions of N elements, with

$$4 \leq N \leq 5.$$

The authentication code and the challenge code may be divided into p authentication segments and portions, respectively, with:

$$p \geq \left\lceil \frac{L}{N} \right\rceil$$

wherein L is the number of elements in the authentication code or the challenge code; and

$\left\lceil \dfrac{L}{N} \right\rceil$ is the ceiling of L/N, i.e. the smallest integer greater than or equal to L/N.

If the ratio L/N is not a natural number, at least one authentication segment having fewer elements than N may be further augmented by duplicating some elements from other authentication segments, so that each authentication segment comprises N elements. The segments and the corresponding portions may overlap at least partially, thereby presenting some redundancy between each other. The segments may be chained.
A current salt, used for encoding a current segment may be stored with a previous authentication segment, so that the previous authentication segment may need to be previously validated so that the current segment can be processed and validated.
The segments may have different lengths compared to each other. The first segment may be longer than the other following chained segments.
The at least one authentication arrangement may comprise symbols, preferably being unique. A randomly generated code may be assigned to each symbol of the authentication arrangement, and each randomly generated code may be stored in a database. For each authentication segment and for each authentication arrangement, a different randomly generated code may be assigned to each symbol of the authentication arrangement, so that the authentication segments each may comprise respectively at least one element corresponding to different authentication arrangements. The authentication arrangements of randomly generated codes and the corresponding encoded segments may be stored as different uncorrelated records in the database. Each randomly generated code may have a length greater than 256 bits, in order to minimize the probability of the same code being generated to represent different symbols.
At least one of the following:

a user identification, and/or
a user name, and/or
a private salt used in the one-way hashing function, and/or
each encoded authentication segment, and/or
cryptographic salts used in the one-way hashing function with a user name or identification in connection with the encoded segments, and/or
each authentication arrangement,

may be stored as different uncorrelated records in a database.
The method may comprise the steps of:

enabling retrieving, as a function of a user identification or at least an encoded authentication segment:

at least one authentication arrangement, and
an encoded authentication segment of the authentication code, wherein the retrieved encoded authentication segment is based on symbols of the retrieved authentication arrangement, and

generating at least a candidate identification pattern by associating signs of a portion of the challenge code with corresponding symbols of the authentication arrangement.

The steps of validating the portions of the challenge code may be performed preferably sequentially, or in parallel.

The challenge code may be invalidated as soon as no match is found for all the candidate identification patterns of a portion of the challenge code.

The obtained authentication code may be discarded as soon as the encoded authentication segments are stored.

If each authentication arrangement comprises S symbols, with S≥30, and if N is a predetermined number of elements in each authentication segment, N may be such that:

$$\left(\sqrt{S}\right)^{N} < 46656$$

If each authentication arrangement comprises S symbols, with S≥30, and if N is a predetermined number of elements in each authentication segment, N may be such that:

$$\left(\sqrt{S}\right)^{N} \times t < 5$$

with t a time, in seconds, of processing an encoding operation by a processor, using a one-way hashing function.

At least one authentication arrangement and/or at least one challenge arrangement may be a matrix used in a matrix pattern authentication, MPA. Each challenge arrangement may have a square form factor a, and

$$m = n = a$$

and

$$a \geq 6$$

with a being a linear dimension of the matrix, each matrix having a size S equal to $a^2$ elements;
m being the number of different signs in each challenge arrangement; and
n being the number of times each different type of signs is replicated in each challenge arrangement.

Each challenge arrangement may have a square form factor a, and

$$m \neq n \neq a$$

and

$$a \geq 6$$

with a being a linear dimension of the matrix, each matrix having a size S equal to $a^2$ elements;
m being the number of different signs in each challenge arrangement; and
n being the number of times each different type of signs is replicated in each challenge arrangement.

Each authentication arrangement may have a square form factor a, and

$$a \geq 6$$

with a being a linear dimension of the matrix, each matrix having a size S equal to $a^2$ elements (101).

The authentication code may be allocated to the user by an administrator of a system of authentication performing the method or selected by the user, optionally the code may be modified at user-configurable or administrator-configurable times.

According to another aspect, the invention provides a system comprising means comprising a processing module, an authentication engine and a database configured to:

obtain an authentication code of a user, the authentication code comprising at least six elements based on a memorable identification pattern, MIP, associated with at least one authentication arrangement,
divide the authentication code into at least two authentication segments each forming a subset of the elements of the authentication code;
encode each of the authentication segments using a one-way hashing function;
store the encoded authentication segments for use in a validation;
obtain a challenge code from the user, the challenge code being based on a pattern associated with at least one challenge arrangement comprising duplicated signs,
divide the challenge code into at least two portions, each corresponding to an authentication segments respectively;
generate candidate identification patterns corresponding to at least one portion of the challenge code;
encode the candidate identification patterns using the one-way hashing function; and
validate the at least one portion of the challenge code if at least one encoded candidate identification pattern matches a corresponding encoded authentication segment; and
validate the challenge code only if each portion of the challenge code corresponding to an authentication segments is validated.

The system may be linked to a device comprising a display for displaying a challenge arrangement to a user during an authentication operation. A database storing records of the encoded segments may comprise dummy records so that the database is bigger than necessary for storing the encoded segments.

According to one aspect, the invention provides a method of processing an authentication code of a user, comprising the steps of:

obtaining an authentication code of a user, the authentication code comprising a plurality of unique elements,
dividing the authentication code into at least two authentication segments each forming a subset of the elements of the authentication code;
encoding each of the authentication segments so that the authentication segments cannot be retrieved from the encoded authentication segments; and
storing the encoded authentication segments independently, i.e. preferably wherein the encoded authentication segments are stored in different and independent records in the database.

The method may further comprise the steps of:

obtaining a challenge code from the user, the challenge code only ambiguously describing the authentication code as being a subset of duplicated signs, only some of the duplicated signs corresponding to the unique elements of the authentication code,
dividing the challenge code into at least two portions, each corresponding to an authentication segment respectively;
generating identification candidates corresponding to at least one portion of the challenge code,

wherein generating identification candidates comprises associating the signs of the challenge code with some unique elements of the authentication code;

encoding each of the identification candidates with the same encoding used for the authentication segments; and
validating the at least one portion of the challenge code if at least one encoded identification candidate matches a corresponding encoded authentication segment; and
validating the challenge code only if each portion of the challenge code corresponding to an authentication segments is validated.

The authentication segments may be chained. Encoding each of the authentication segments may use a one-way hashing function using a salt, and a previous authentication segment may be stored in a first record of the database, and a current salt, used for encoding a current segment stored in a second record of the database, may be stored in the first record of the database along with the previous authentication segment, so that the previous authentication segment needs to be previously validated so that the current segment can be validated.

According to another aspect, the invention provides a method of processing an authentication code of a user, comprising the steps of:

obtaining an authentication code of a user, the authentication code comprising a plurality of unique elements,
dividing the authentication code into at least two authentication segments each forming a subset of the elements of the authentication code;
encoding each of the authentication segments so that the authentication segments cannot be retrieved from the encoded authentication segments; and
storing the encoded authentication segments for use in a validation in at least one record of a database;
wherein encoding each of the authentication segments uses a one-way hashing function using a salt, and
wherein the authentication segments are chained such that
a previous authentication segment is stored in a first record of the database, and
a current salt, used for encoding a current segment stored in a second record of the database, is stored in the first record of the database along with the previous authentication segment,

so that the previous authentication segment needs to be previously validated so that the current segment can be validated.

The segments may overlap at least partially, thereby presenting some redundancy of elements between each other. The segments may have different lengths compared to each other. The first segment may be longer than the other following segments.

The elements of the authentication code may be associated with symbols, and a randomly generated set of codes may be assigned to each symbol for at least one segment, and each randomly generated set of codes may be stored in a record of the database.

For each authentication segment, a different randomly generated set of codes may be assigned to each symbol, so that the authentication segments each comprise respectively at least one element corresponding to different set of codes. Each randomly generated set of codes, and the corresponding encoded segments may be stored as different uncorrelated records in the database.

The obtained authentication code may be discarded as soon as the encoded authentication segments are stored.

The module may store at least a first part of the authentication segments on the device, and the module may store at least a second part of the authentication segments on the database.

The authentication code may be divided into segments of N elements, with

$$4 \le N \le 5$$

The challenge code may be divided into portions of N elements, with

$$4 \le N \le 5$$

The authentication code and the challenge code may be divided into p authentication segments and portions, respectively, with:

$$p \ge \left\lceil \frac{L}{N} \right\rceil$$

wherein L is the number of elements in the authentication code or the challenge code; and

$\left\lceil \dfrac{L}{N} \right\rceil$ is the ceiling of L/N, i.e. the smallest integer greater than or equal to L/N.

If the ratio L/N is not a natural number, at least one authentication segment having fewer elements than N may be further augmented by duplicating some elements from other authentication segments, so that each authentication segment comprises N elements.

At least one of the following:

a user identification, and/or

a user name, and/or

a private salt used in the one-way hashing function, and/or

each encoded authentication segment, and/or

cryptographic salts used in a one-way hashing function with a user name or identification in connection with the encoded segments, and/or

each authentication arrangement,

may be stored as different uncorrelated records in the database.

The elements of the authentication code may be based on a memorable identification pattern, MIP, associated with at least one authentication arrangement, and the at least one authentication arrangement may be a matrix used in a matrix pattern authentication, MPA. Each authentication arrangement may have a square form factor a, and wherein

$$a \geq 6$$

with a being a linear dimension of the matrix, each matrix having a size S equal to $a^2$ elements.

The authentication code may comprise at least six elements. The authentication code may be allocated to the user by an administrator of a system of authentication performing the method or selected by the user, optionally the code may be modified at user-configurable or administrator-configurable times. The module may store at least a first part of the authentication segments on the device, and the module may store at least a second part of the authentication segments on the database. A record of the challenge arrangement may be stored in the database and in the device.

The device may perform locally at least partially generating candidate identification patterns corresponding to at least one portion of the challenge code, wherein generating candidate identification patterns may comprise associating the signs of the challenge code with some unique elements of the authentication code, using the record of the challenge arrangement stored in the device. An authentication engine may perform remotely from the device at least partially generating candidate identification patterns corresponding to at least one portion of the challenge code, wherein generating candidate identification patterns may comprise associating the signs of the challenge code with some unique elements of the authentication code, using the record of the challenge arrangement stored in the database.

According to another aspect, the invention provides a system comprising means comprising a processing module, an authentication engine and a database configured to:

obtain an authentication code of a user, the authentication code comprising a plurality of unique elements,

divide the authentication code into at least two authentication segments each forming a subset of the elements of the authentication code;

encode each of the authentication segments so that the authentication segments cannot be retrieved from the encoded authentication segments; and

store the encoded authentication segments for use in a validation in at least one record of a database,

wherein the at least two authentication segments are stored in different and independent records in the database.

According to another aspect, the invention provides a system comprising means comprising a processing module, an authentication engine and a database configured to:

obtain an authentication code of a user, the authentication code comprising a plurality of unique elements,

divide the authentication code into at least two authentication segments each forming a subset of the elements of the authentication code;

encode each of the authentication segments so that the authentication segments cannot be retrieved from the encoded authentication segments; and

store the encoded authentication segments for use in a validation in at least one record of a database;

wherein encoding each of the authentication segments uses a one-way hashing function using a salt, and

wherein the authentication segments are chained such that

a previous authentication segment is stored in a first record of the database, and

a current salt, used for encoding a current segment stored in a second record of the database, is stored in the first record of the database along with the previous authentication segment,

so that the previous authentication segment needs to be previously validated so that the current segment can be validated.

According to one aspect, the invention provides a method of authentication of a user, comprising the steps of:

displaying, on a display, a pattern, such as a matrix pattern, associated with at least one challenge arrangement comprising duplicated signs;

obtaining a challenge code on a device, the challenge code being based on the pattern, such as comprising signs as shown by the pattern;

dividing the challenge code into at least two portions, each portion corresponding to an authentication segment of an authentication code of the user, such as a preset code of the user, respectively;

w herein at least a first part of the authentication segments and at least a first corresponding part of the at least two portions are stored on the device;

validating the first part of the portions only if

it matches the corresponding first part of the authentication segments; and
the device from which the challenge code is obtained has been previously registered to an authentication system.

The authentication system may comprise a database remote from the device, and at least a second part of the authentication segments may be stored on the database, and/or a record of the challenge arrangement may be stored in the device and in the database.

At least one of the following:

a user identification, and/or
a user name, and/or
at least one authentication arrangement with which the authentication code is associated

may be stored as an independent record in the device or in a database remote from the device.

The method may further comprise reading a biometric data of a user, on the device; comparing the biometric data with a reference biometric data; and validating the first part of the portions only if the read biometric data matches the reference biometric data. The reference biometric data may be stored on the device.

The biometric data may be a voice and/or a shape of the face and/or an image of the iris and/or a fingerprint of the user.

The pattern associated with at least one challenge arrangement comprising duplicated signs may be displayed on the device.

According to another aspect, the invention provides an apparatus for the authentication of a user, comprising means comprising a display, a processing module, an authentication engine and a database configured to:

display a pattern, such as a matrix pattern, associated with at least one challenge arrangement comprising duplicated signs;

obtain a challenge code on a device, the challenge code being based on the pattern, such as comprising signs as shown by the pattern;

divide the challenge code into at least two portions, each portion corresponding to an authentication segment of an authentication code of the user such as a preset code of the user, respectively;

wherein at least a first part of the authentication segments and at least a first corresponding part of the at least two portions are stored on the device;

validate the first part of the portions only if

it matches the corresponding first part of the authentication segments; and
the device from which the challenge code is obtained has been previously registered to an authentication system.

The apparatus may comprise a database remote from the device, at least a second part of the authentication segments may be stored on the database. The apparatus may comprise a database remote from the device, a record of the challenge arrangement may be stored in the device and in the database.

The apparatus may further comprise means for

reading a biometric data of a user, on the device;
comparing the biometric data with a reference biometric data; and
validating the first part of the portions only if the read biometric data matches the reference biometric data.

Aspects of the invention extend to computer program products such as computer readable storage media having instructions stored thereon which are operable to program a programmable processor to carry out a method as described in the aspects and possibilities set out above or recited in the claims and/or to program a suitably adapted computer to provide the system recited in any of the claims.

The invention has advantages over the prior art.

The invention dramatically reduces the processing requirements for authentication, whilst still achieving acceptable security.

Therefore the invention is entirely scalable to large dimension matrices or arrangements with any form factor, particularly although not exclusively where the number of elements in the array is greater than 30, and is also entirely scalable to long MIPs.

The invention enables the use of large square matrices which possess significantly greater entropy compared to known 5x5 matrices. For example, a 36 element (6 x 6) array has 2.1 billion potential combinations with a choice of six elements to make up a MIP.

The invention also enables the use of MIP having a length of at least 6 elements, and therefore ensures that the probability of randomly guessing a MIP from an OTC at authentication is lower than the probability of randomly guess a classic four digit PIN (10,000:1). For example, with a choice of six signs each repeated six times in a challenge matrix, the probability of guessing the MIP in the random is $1/46,656$ ($46,656 = 6^6$).

Consequently the invention provides a MPA technology which has superior and sufficient entropy compared to the prior art, and also has superior and sufficient resistance to guessing an MIP compared to the prior art.

In some aspects of the invention, a higher security than the prior art is achieved, based on the separation of the segments of the MIP in different independent records and on their chained relationship, e.g. a current segment cannot be validated if the previous segment is not validated.

In some aspects, a first part of the encoded segments is stored on the device of the user, and a second part is stored on a remote database of the system, enhancing security.

Additionally or alternatively, the identification of the device on which the challenge code is entered can also be taken into account, providing a two-factor system. Further, a biometric data, such as the voice of the user, can also be taken into account in the authentication operation, providing a three-factor system.

The invention has advantages in both online security context and offline security context.

In the context of online security, the invention has the advantage of a short processing time, which constitutes acceptable security because the system of the invention is not vulnerable to attacks from hackers by bombardment of multiple authentication requests, and therefore does not lead to a denial of service.

In the context of offline security, the invention has the advantage of a long hashing processing time, which means that even if a hacker steals the database storing the tables of records of the segments, the database would still be hard and long to process. If the segments are preferably chained, the hacker would further need to cross each table with itself to find a potential next segment. Preferably at least some of the records are anonymised in such a way that it is not possible to directly relate the record with any particular user identification and the hashing time is multiplied by the number of records in each table.

In some aspects, the segments overlap, and a database storing the tables of records of the segments have more segments than necessary, or even dummy records. In the context of offline security, the invention has therefore the advantages of making the database bigger and therefore longer to process for a hacker.

In some aspects, the segments have different lengths and have redundancy between each other. In the context of offline security, the invention has therefore the advantages of making the database harder to process for a hacker, because it is hard to know both the length of the segments and the correspondence between the patterns of segments and/or the users. In some aspects, the first segment of a chain is longer than the other chained segments. The first segment takes therefore more time to decode, which is advantageous in the context of offline security, and not detrimental in the context of online security, because the invention has then the advantage that the following shorter segments have a shorter processing time, because they comprise at least a part of a previous decoded segment which can be used for validation of the current segment.

Embodiments of the invention will now be described, by way of example, with reference to the accompanying drawings in which:

Figures 1A and 1 B, already discussed, schematically illustrate MPA matrices;
Figures 2A and 2B, already discussed, schematically illustrate MIP in the MPA matrices of Figures 1A and 1 B, respectively;
Figures 3A and 3B, already discussed, schematically illustrate challenge matrices corresponding to the MPA matrices of Figures 1A and 1 B, respectively;
Figure 4, already discussed, schematically illustrates an exemplary indexing of the MPA matrix of Figure 1A;
Figure 5, already discussed, schematically illustrates an exemplary encoding of a MIP;

Figure 6 schematically illustrates an authentication system, comprising a processing module and an authentication engine;

Figure 7 is a diagram illustrating an exemplary method performed by the authentication system of Figure 6;

Figure 8 schematically illustrates an exemplary dividing of a MIP performed by the authentication system of Figure 6;

Figure 9 schematically illustrates exemplary steps of the dividing of Figure 8;

Figure 10 schematically illustrates a possible generation of codes performed by the authentication system of Figure 6;

Figure 11 schematically illustrates exemplary steps of the generation of Figure 10;

Figure 12 schematically illustrates an exemplary storing performed by the authentication system of Figure 6;

Figure 13 schematically illustrates exemplary steps of the storing of Figure 12;

Figures 14 and 15 schematically illustrate an exemplary authentication method performed by the authentication system of Figure 6; and

Figure 16 schematically illustrates exemplary steps of the method of Figures 14 and 15;

Figure 17 schematically illustrates a two-factor authentication system, comprising a processing module and an authentication engine;

Figure 18 is a diagram illustrating an exemplary method performed by the authentication system of Figure 17;

Figure 19 schematically illustrates an three-factor authentication system, comprising a processing module and an authentication engine, and

Figure 20 is a diagram illustrating an exemplary method performed by the authentication system of Figure 19.

In all of the Figures, similar parts are referred to by like numerical references.

An aspect of the invention will now be described with reference to Figures 4 to 9.

The invention provides a method of processing an authentication code of a user U, performed by a system comprising at least a processing module 10, a database 11 and an authentication engine 2.

As will be apparent to the skilled in the art, in the following specification the processing module 10 and the authentication engine 2 should not be understood as limited natural entities, but rather refer to physical devices comprising at least a processor and a memory, the memory being comprised in one or more servers which can be located in a single location or can be remote from each other to form a nebulous network (such as server farms). Similarly, the database 11 may be comprised in one or more servers which can be located in a single location or can be remote from each other to form a nebulous network.

As explained in further detail below, a device 3 (such as a laptop, a personal computer, a Personal Digital Assistant, a phone, a smartphone, or a dedicated token, etc.) comprises at least a processor and a memory. The device 3 is linked to the system, and may preferably use wireless technology to communicate with the system. In that case, the system comprises cellular base stations (using mobile technology) and/or other Wireless Access Points (using other wireless communications) such as WiFi, Bluetooth™ or near-field technology (also called sometimes "Near Field Communication" or "NFC"). The device 3 may also use wired access point (such as a wired modem) to communicate with the system. The communication between the device 3 and the system preferably complies with Secure Socket Layer (SSL) or Transport Layer Security (TLS) protocols known by the skilled person in the art.

As will be apparent to the skilled person in the art, in the following specification the device 3 also should not be understood as a limited natural entity, but may rather refer to physical devices comprising at least a processor and a memory, and the processor and the memory may be comprised in one or more apparatuses and/or servers which can be located in a single location or can be remote from each other to form a nebulous network (such as server farms). The device 3 may therefore comprise for instance a laptop, a personal computer, a Personal Digital Assistant, a phone, a smartphone, etc., thus comprising a display, for selecting the authentication code and transmitting it to the system during a registration operation, and may comprise also a separate dedicated token comprising a display for displaying a challenge arrangement to a user during an authentication operation. Additionally or alternatively, a single device 3 may perform the selecting and transmitting of the authentication code during the registration operation, and also the displaying of the challenge arrangement to a user during an authentication operation.

The device 3 enables the user U to enter and transmit, during an authentication operation e.g. via any Human User interface mechanism, such as part of a logon process for a device 3 being a smartphone or an Internet browser, at least a one time code (OTC), also called "challenge code", associated with a challenge array to the system. As already stated, the OTC comprises the signs corresponding to the pattern presented in the challenge matrix 200. Preferably the device 3 enables the user U to enter also user identification. In some embodiments the device 3 is configured to belong to the user U such that entering of user identification may not be needed.

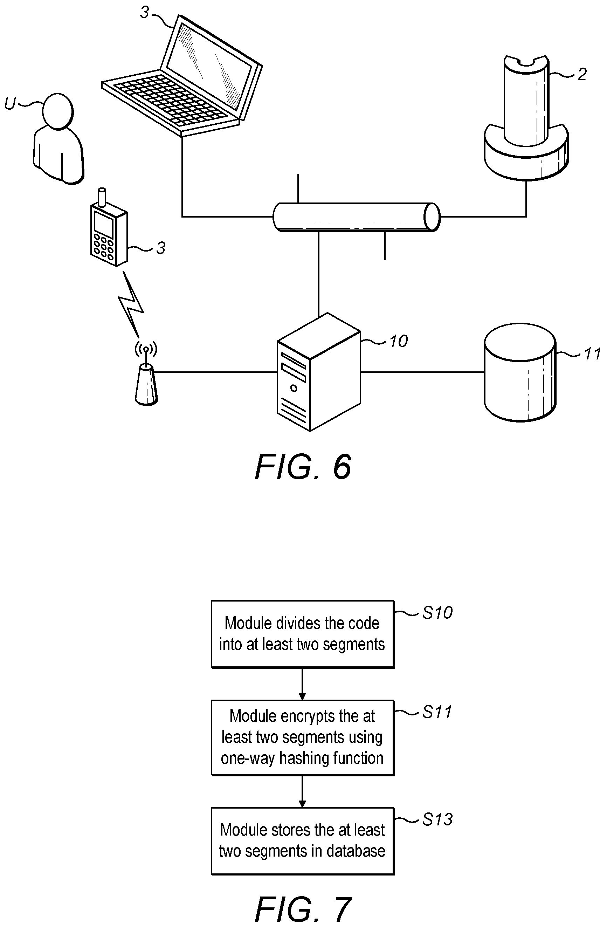

It should be appreciated that Figure 6 shows functional block diagrams, and that in practice the individual blocks shown in Figure 6 may exist as discrete elements or their functionality may be distributed in different combinations or not individually discernable. In that respect, some of the functionality of the processing module 10 and/or the authentication engine 2 and/or to the device 3 may be distributed in different combinations or may be at least partially merged.

The authentication code has a length L of at least six elements e, and users U are encouraged to have codes greater than six if possible. The code may be allocated to the user by an administrator of the system. However the module 10 is preferably configured to enable the user U to select their authentication code. Optionally, the code is modified at user-configurable or administrator-configurable times, as variable code lengths are a strong security feature, adding significantly to entropy.

The code is associated with a memorable identification pattern (MIP), based on an authentication arrangement, preferably but not exclusively used in a Matrix Pattern Authentication (MPA) and, with that respect and as shown in reference to Figure 4, the elements of the code form a set of the elements of at least one authentication array or arrangement 100 comprising S symbols s, preferably unique symbols.

In some aspects of the invention, once the authentication code is confirmed by the user U, e.g. on the device 3, the processing module 10 divides, in S10, the authentication code into at least two authentication segments, such as c1, c2 or c3, forming each a subset of the elements, not necessarily disjoint, of the authentication code.

The processing module 10 is further configured to encode in S11 each of the authentication segments using a one-way hashing function, using an industry standard, strong algorithm, with appropriate salting, as known by those skilled in the art, e.g. the known one-way hashing functions from the family SHA-2, such as SHA-256.

The module 10 then stores in S13 the encoded authentication segments, e.g. referred to as c1 ux and c2ux in the database 11, not as a single entity, but rather as at least two smaller segments.

As explained in further detail below, the segments are preferably chained: validation of a first, previous, segment, by matching it with its corresponding part of the OTC, is needed in order to access a reference (or address or pointer) to a second, following, segment, etc. To that effect, preferably an encoding salt stored with a current segment is not actually used to hash the current segment, but to hash the following segment in the chain.

However the fact that the authentication code is divided in at least two segments provides the advantages that corresponding segments (or portions) of a challenge code can be processed by an authentication engine 2 in an acceptable period of time, whilst still achieving acceptable online and offline security, as explained below.

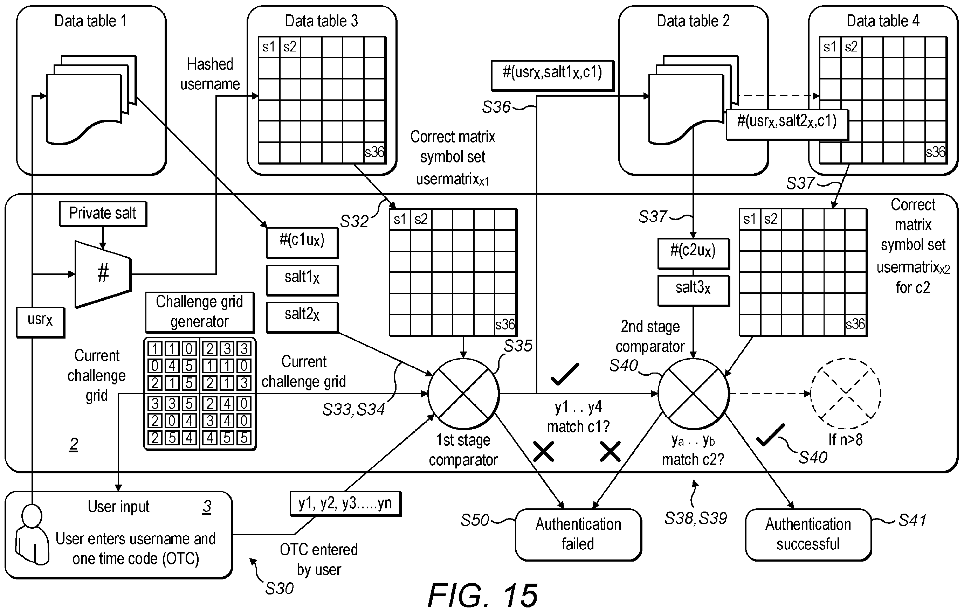

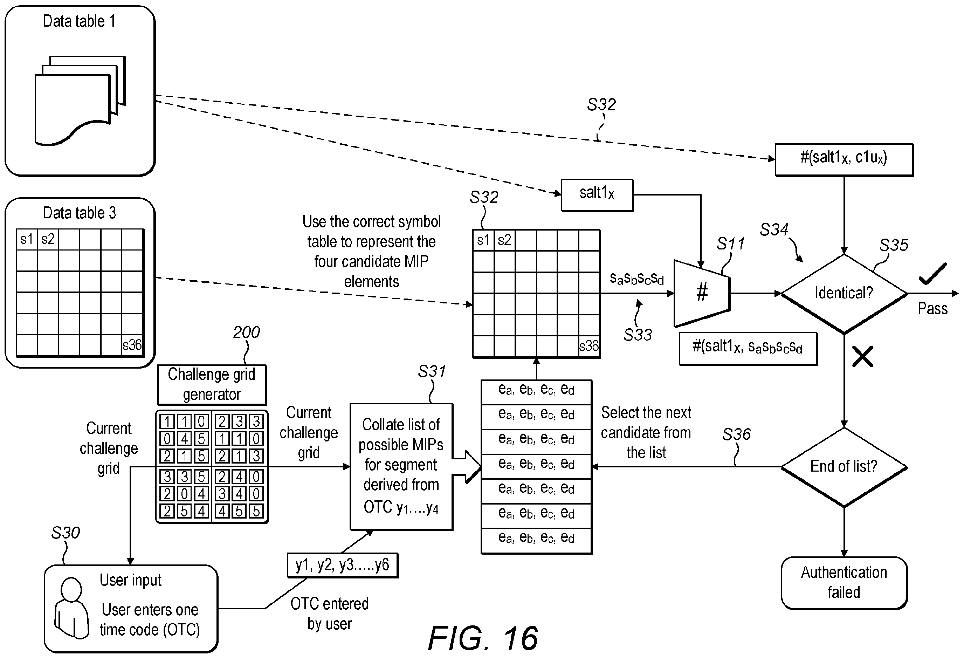

In some aspects of the invention, described with reference to Figures 5, 6 and 14 to 16, the device 3 transmits in S30 the OTC entered by the user during an authentication operation to the engine 2. The OTC comprises a set of elements of the at least one challenge arrangement 200 presented to the user U and comprising signs 201 which are duplicated in the challenge arrangement 200 (i.e. each sign is repeated more than one time, preferably a large number of times). As explained below, in S30 a record of the challenge arrangement 200 presented to the user U is stored, preferably in the database 11.

The authentication engine 2 is configured to divide in S31 the OTC into at least two portions forming each a subset of the elements of the OTC, and each corresponding to an authentication segments, e.g. c1, c2 or c3, respectively.

The authentication engine 2 is adapted to generate, e.g. in S33 and S38, identification candidates, such as candidate identification patterns, corresponding to at least one portion of the OTC, e.g. by associating the signs of the portions with corresponding unique symbols (s1, s2, s3, s4...s36) of the authentication arrangement 100. To that effect, it is understood that the associating in S33 and S38 uses the record of the challenge arrangement 200 stored in S30. The record of the challenge arrangement 200 provides indeed all the positions of the signs in the challenge arrangement 200, for their association with an element of a corresponding authentication arrangement.

In S34 and S39, the authentication engine 2 encodes the candidate identification patterns using the same one-way hashing function as the one used for encoding the authentication segments in S11.

In S34, S35, S39 and S40, the authentication engine 2 validates a candidate identification pattern only if it matches a corresponding encoded authentication segment of the authentication code, as explained in further detail below.

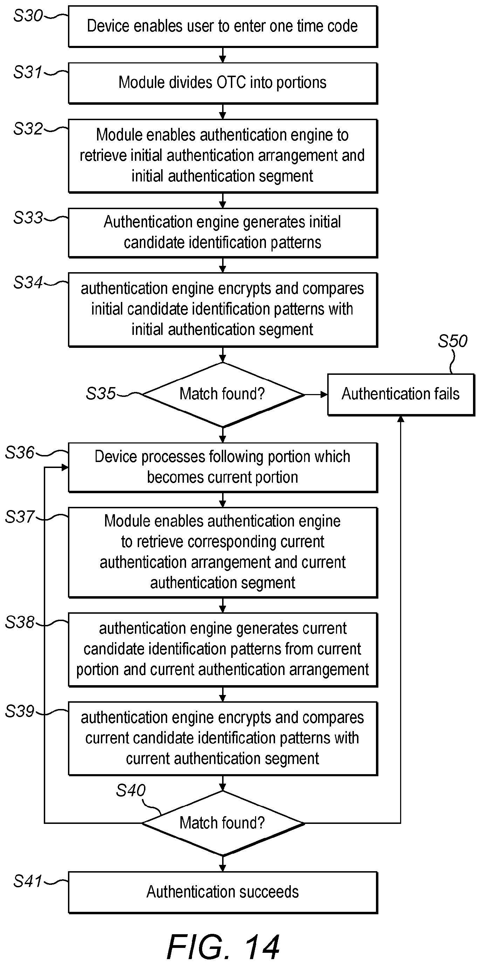

As can be seen from figure 14, the authentication engine 2 is further configured to validate in S41 the OTC (challenge code) only if each portion of the OTC corresponding to an authentication segments is validated.

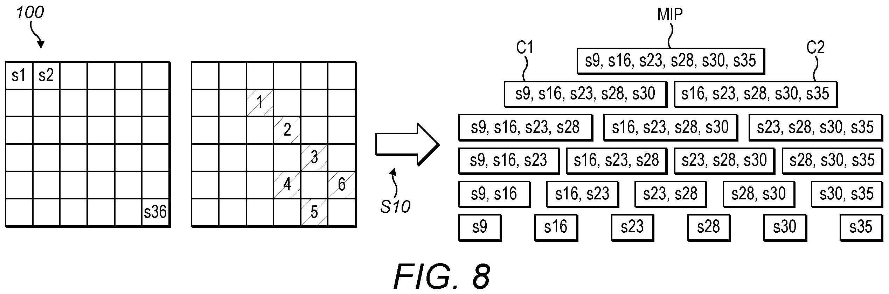

As already explained below, the invention applies to any authentication arrangement 100 of size S used in any MPA system, not only those of a square form factor. However for the sake of the conciseness and clarity, the invention will now be explained in reference to Figure 8, in which the array has a square form factor and:

$$L = 6$$

$$S = 36.$$

In Figure 8, the MIP authentication code is say s9, s16, s23, s28, s30, s35, and can be divided in S10 into not necessarily disjoint segments, i.e. into either

two segments c1 and c2,

with c1 being s9, s16, s23, s28, s30; and with c2 being s16, s23, s28, s30, s35 (i.e. N=5); or

three segments c1,c2 and c3,

with c1 being s9, s16, s23, s28; c2 being s16, s23, s28, s30; and with c3 being s23, s28, s30, s35 (i.e. N=4); or

four segments c1 ,c2, c3 and c4,

with c1 being s9, s16, s23; c2 being s16, s23, s28; c3 being s23, s28, s30; and with c4 being s28, s30, s35 (i.e. N=3); or

five segments c1,c2, c3, c4 and c5,

with c1 being s9, s16; c2 being s16, s23; c3 being s23, s28; c4 being s28, s30; and with c5 being s30, s35 (i.e. N=2); or

six segments c1,c2, c3, c4, c5 and c6,

with c1 being s9; c2 being s16; c3 being s23; c4 being s28; c5 being s30; and with c6 being s35 (i.e. N=1).

Table 2 shows how many iterations (also referred to as hash searches) are required for an authentication engine 2 to match a portion of an OTC to a corresponding authentication segment of the MIP.

Table 2

| Elements in each MIP segment | Unique symbol combinations per segment | Number of hash searches to match a segment | Approx. elapsed time to complete search* |
|---|---|---|---|
| 6 | 2,176,782,336 | 46,656 | 10s |
| 5 | 60,466,176 | 7,776 | 1.5s |
| 4 | 1,679,616 | 1,296 | 0.25 s |
| 3 | 46,656 | 216 | 40 ms |
| 2 | 1,296 | 36 | 8 ms |
| 1 | 36 | 6 | 1.5 ms |

Table 2 also shows an estimate of processing time required to match a portion of an OTC with a corresponding encoded segment of MIP, with a time of 0.2ms for each iteration.

Therefore according to some aspects of the invention, the module 10 is configured to divide the authentication code into segments of N elements, with

$$N \leq 5 \, .$$

Shorter authentication segments (N<6) and their corresponding portions of the OTC have the very desirable property that they can be processed much more quickly by the authentication engine 2, in order to validate the one time code (6 iterations for segments of N=1, instead of 46656, as explained above, for N=6). It is understood that several processing steps are now required, depending on the length of the MIP and the number of segments. The invention has however the advantage that the increase in processing time required is now linear (each time for an extra processing step adds to the previous times), rather than geometric as a function of L and/or S.

A further benefit of the invention is that the time taken to reject an incorrect one-time code is dramatically reduced, and is now 1,296 iterations, instead of 46,656 iterations in the unsegmented scheme.

Therefore, according to some aspects of the invention, if each authentication arrangement 100 comprises S unique symbols (s1, s2, s3, s4...s36), with S≥30, and N is a predetermined number of elements in each authentication segment, N is such that:

$$\left(\sqrt{S}\right)^{N} < 46656\,.$$

According to some further aspects, N is such that:

$$\left(\sqrt{S}\right)^{N} \times t < 5$$

with t a time, in seconds, of processing an encoding operation by a processor, using a one-way hashing function, from a family such as SHA-2, such as SHA-256. As explained above, t is typically equal to 0.0002 second (0.2ms).

Segmentation of the MIP provides therefore online security, however it introduces a different problem.

In the case of a segment, the number of unique symbols is reduced, and hence if a hacker is in possession of the symbols used to represent the MIP at the time of encoding, it becomes easier to deduce the MIP by trying every possible combination of symbols. With a segment length of 6 (N=6), there are 2.1 billion combinations from any given set of symbols. At the other extreme with the MIP broken into six individual symbols, each just one symbol long (N=1), there are only 36 possible combinations. This is adjudged to be far too vulnerable to attack. This vulnerability is known to afflict PIN numbers, as they are represented by only 10,000 unique possible combinations, for the same set of 10 unique symbols used four times.

Furthermore the security of an MPA system should be significantly better than that of a PIN number base system.

Therefore according to some aspects of the invention, the module 10 is configured to divide the authentication code into segments of N elements, with

$$4 \leq N\,.$$

In some further aspects, with S≥30, N is such that:

$$S^{N} >> 10^{4}\,.$$

The invention provides therefore offline security, because the hashing processing time is sufficiently long.

Table 2 shows that the difference on processing speed is marginal between N equal 4 or 5, especially on powerful authentication engine 2.

The segments may differ in length, or all segments may be of equal length.

If the segments have different lengths, it is more difficult for a hacker to process the database 11, because the hacker needs further to know both the length of the segments and the correspondence between the patterns of segments and/or the users.

In that case and if the segments are further chained, preferably the first segment is longer than the other segments (for example N=6 for c1, and N=4 for c2, N=4 or 3 for c3, etc.), because it is longer and harder for a hacker to process and validate the first segment which is necessary for validation of the other segments.

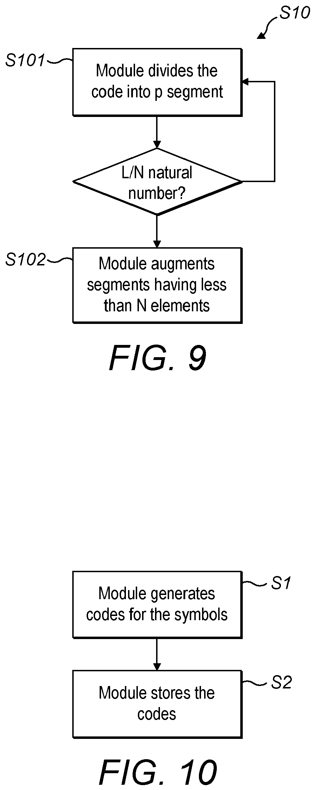

In some aspects of S10 as shown in Figure 9, the module 10 is configured to divide, in S101, the authentication code into p authentication segments, with

$$p \geq \left\lceil \frac{L}{N} \right\rceil \qquad (E1)$$

wherein $\left\lceil \frac{L}{N} \right\rceil$ is the ceiling of L/N, i.e. the smallest integer greater than or equal to L/N.

Accordingly, in S31 as shown in Figure 14, the module 10 is configured to divide the OTC into p portions according to (E1).

(E1) means that for e.g.

L=7 and N=4,

7/4=1.75, and then p may be equal to 2 (as in Table 3 below) if preferably the segments overlap at least partially as explained below; and that e.g. for

L=8 and N=4,

8/4=2, and then p may be equal to 2 (as in Table 3) if the segment are disjoint, or p may be equal to 3 if preferably the segments overlap at least partially; and that e.g. for

L=11 and N=4,

11/4=2.75; and then p may be equal to 3 (as in Table 3) if preferably the segments overlap at least partially.

Preferably indeed the segments overlap at least partially and have an extent of redundancy between each other. Therefore the database 11 storing the tables of records of the segments have more segments than necessary, and is bigger and harder for a hacker to process. It is also more difficult for a hacker to process the database 11, because the hacker needs further to know both the length of the segments and the number of segments.

In that case and if the segments are further chained, each current segment has a short processing time during validation, because it comprises at least a part of a previous decoded segment which can be used for validation of the current segment.

Preferably the database might comprise dummy records, so that the database is bigger than necessary for storing the encoded segments.

If the ratio L/N is not a natural number, the module 10 preferably further augments, in S102, at least one segment having fewer elements than N, by duplicating some elements from other segments, so that each segment comprises N elements. The exact symbols duplicated in the segments are not critical.

Tables 3 and 3a below show non limiting examples of the number of segments for MIP lengths of 6 to 12 elements long, but maybe further extended. Table 3 shows that for N=4, a MIP represented by the code e1, e2, e3, e4....e12 may be segmented as follows:

Table 3

| MIP length | Segment c1 | Segment c2 | Segment c3 |
|---|---|---|---|
| 6 | e1,e2,e3,e4 | e3,e4,e5,e6 | n/a |
| 7 | e1,e2,e3,e4 | e4,e5,e6,e7 | n/a |
| 8 | e1,e2,e3,e4 | e5,e6,e7,e8 | n/a |
| 9 | e1,e2,e3,e4 | e5,e6,e7,e8 | e6,e7,e8,e9 |
| 10 | e1,e2,e3,e4 | e5,e6,e7,e8 | e7,e8,e9,e10 |
| 11 | e1,e2,e3,e4 | e5,e6,e7,e8 | e8,e9,e10,e11 |
| 12 | e1,e2,e3,e4 | e5,e6,e7,e8 | e9,e10,e11,e12 |

Table 3 shows re-use of part of the previously derived code (there is preferably at least partial overlapping of the segments, i.e. a "sliding scale"). The overlapping creates only a weak interdependence between the MIPs segments.

Table 3a, below, shows a non-limiting example of overlapping elements in a segment, in order to always break a MIP into three segments, for any length of MIP, up to 12 elements. This has the advantage over the example in table 3 above, in that the use of a third segment will make it harder for a hacker to associate the three, apparently uncorrelated segments together.

Table 3a

| MIP length | Segment c1 | Segment c2 | Segment c3 |
|---|---|---|---|
| 6 | e1,e2,e3,e4 | e2,e3,e4,e5 | e3,e4,e5,e6 |
| 7 | e1,e2,e3,e4 | e3,e4,e5,e6 | e4,e5,e6,e7 |
| 8 | e1,e2,e3,e4 | e2,e3,e5,e6 | e5,e6,e7,e8 |
| 9 | e1,e2,e3,e4 | e3,e4,e7,e8 | e6,e7,e8,e9 |

(continued)

| MIP length | Segment c1 | Segment c2 | Segment c3 |
|---|---|---|---|
| 10 | e1,e2,e3,e4 | e4,e5,e6,e7 | e7,e8,e9,e10 |
| 11 | e1,e2,e3,e4 | e5,e6,e7,e8 | e8,e9,e10,e11 |
| 12 | e1,e2,e3,e4 | e5,e6,e7,e8 | e9,e10,e11,e12 |

Table 3b below shows the maximum number of hashing iterations required to find each segment of a user's MIP, for different MIP lengths and N=4. Processing time is based on 0.2ms per hashing operation, and is compared with the processing time required to process a single unsplit MIP, with six unique symbols in the OTC.

Table 3b

| MIP length | Iterations required -c1- | Iterations required -c2- | Iterations required -c3- | Total max iterations | Indicative processing time @ 2ms per hash | Indicative processing time, with single, unsplit MIP |
|---|---|---|---|---|---|---|
| 6 | 1296 | 36 | - | 1332 | 0.26s | 9.2s |
| 7 | 1296 | 216 | - | 1512 | 0.30s | 56s |
| 8 | 1296 | 1296 | - | 2592 | 0.52s | 6mins |
| 9 | 1296 | 1296 | 6 | 2598 | 0.52s | 33mins |
| 10 | 1296 | 1296 | 36 | 2628 | 0.53s | 3.3hrs |
| 11 | 1296 | 1296 | 216 | 2808 | 0.56s | 20hrs |
| 12 | 1296 | 1296 | 1296 | 3888 | 0.78s | 5 days |

Another aspect of the invention will now be described with reference to Figures 5, 6 and 10.

As shown in Figure 10, the invention also provides a method of processing the authentication code of the user in which, in some aspects and, in order to further improve security, the symbols are not represented by a simple numeric sequence, but the processing module 10 assigns, in S1, a randomly generated code to each symbol of the at least one arrangement 100. So, in the case of an arrangement 100 being a 6 x 6 matrix, 36 random symbols s1...s36 are generated. The invention provides therefore the advantage of keeping the pattern even more secret.

Preferably, the module 10 stores in S2 each randomly generated code s1, s2, s3... s36 in the database 11, and as explained in further detail below, the codes s1, s2, s3...s36 are recalled only when needed at authentication.

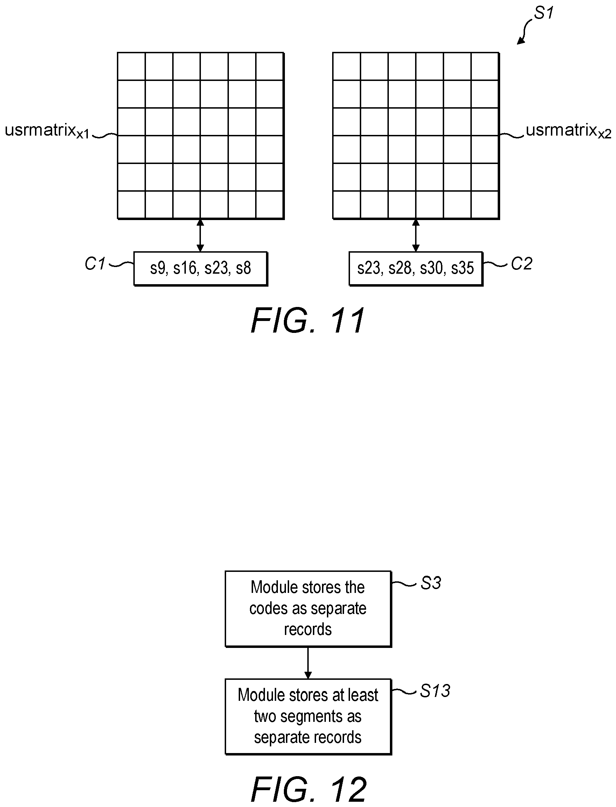

Preferably, as shown in Figure 11, the module 10 assigns in S1, for each segment, e.g. for c1 and c2, and for each array, for example referred to as usrmatrix$_{x1}$ (or usermatrix$_{x1}$ and usrmatrix$_{x2}$ (or usermatrix$_{x2}$), a different randomly generated code to each symbol of the arrangement, so that the segments comprise each respectively at least one element corresponding to different arrangements. Preferably the elements of each segment c1 or c2 may be encoded using a different unique set of 36 symbols. Thus the symbols used in segment c1 are preferably different from those in segment c2 and so on.

Preferably, the two symbols sets are stored in S2 each in a different record on the database 11.

However, in order to minimize the probability of the same code being generated to represent different symbols in the arrangement 100 (namely, a collision), the symbol length needs to be long. Preferably, the symbol code length is at least 256 bits long. Each symbol is generated using a random number generator. In that case, the probability of a collision occurring between any two symbols is inferior to $1/10^{77}$ and guarantees that each symbol table is therefore unique.

Another aspect of the invention will now be described with reference to Figures 5, 6, 12 and 13.

The invention also provides a method of processing the authentication code of the user U in which, in some aspects, the processing module 10 stores in S2 at least one arrangement of unique symbols and stores in S13 the at least two segments, as different uncorrelated records in the database 11. The invention has therefore the advantages that key pieces of information needed to authenticate a one time code are separated and uncorrelated. Each piece of information required is referenced by a different reference address in the database 11, such that it would be virtually impossible for anyone to correlate all the different components needed to achieve authentication. The referencing address used for this information adds significant protection.

These key pieces of information (or data) may comprise at least one of the following:

a user identification, and/or
a user name (usr$_x$), and/or
a private salt (psalt) used in the one-way hashing function (e.g. belonging to the family SHA-2, e.g. SHA-256), and/or
each encoded authentication segment c1u$_x$ or c2u$_x$, preferably chained, and/or
cryptographic salts (salt1$_x$, salt2$_x$, salt3$_x$, salt3$_x$, etc.) used in the one-way hashing function with a user name or identification in connection with the encoded segments, and/or
each authentication arrangement usrmatrix$_{x1}$ or usrmatrix$_{x2}$,

as different uncorrelated records in a database 11.

Preferably at least some of the records are anonymised (i.e. cannot be related back to the user identity) and are only referenced using a hashing function applied to the user name (usr$_x$).

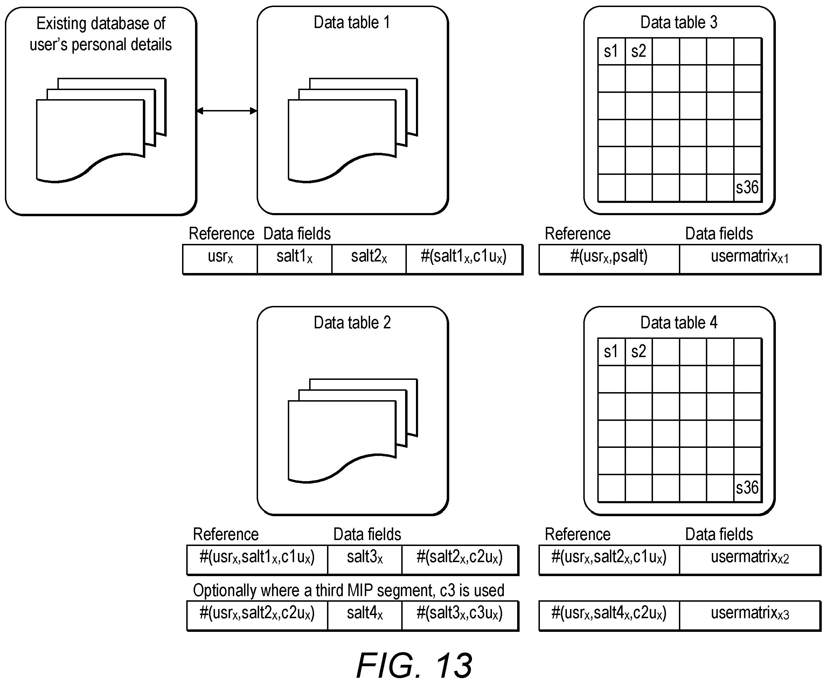

Figure 13 shows that the data are stored e.g. in four separate tables:

Data table 1: referenced by usr$_x$, with the data fields salt1$_x$ and salt2$_x$ (used in the hashing function in S11 for encoding the first segment) and hashing(salt1$_x$, c1u$_x$) (also referred to as #(salt1$_x$, c1u$_x$));
Data table 2: referenced by #(usr$_x$, salt1$_x$, c1u$_x$), with the data fields salt3$_x$ and #(salt2$_x$, c2u$_x$);
Data table 3: referenced by #(usr$_x$, psalt$_x$), with the data field usrmatrix$_{x1}$;
Data table 4: referenced by #(usr$_x$, salt2$_x$, c1u$_x$), with the data field usrmatrix$_{x2}$.

Another aspect of the invention will now be described with reference to Figures 5, 6 and 14 to 16.

In S30, the device 3 enables the user U to enter at least the OTC comprising L signs associated with the challenge arrangement 200, and preferably a user identification usr$_x$ (alternatively the device 3 may be associated with the user U). The OTC is transmitted to the module 10 and the length L of the one time code is measured by the module 10.

In S31, the module divides the OTC into challenge p portions, preferably using (E1).

In S32, the module 10 enables the authentication engine 2 to retrieve, as a function of the user identification usr$_x$,

at least an initial authentication arrangement usrmatrix$_{x1}$, and
an initial authentication segment c1u$_x$ of the authentication code.

Preferably, in S32 a temporary hash function 320 is run, using usr$_x$ and psalt, to perform #(usr$_x$, psalt$_x$) in order locate the data table 3 and usermatrix$_{x1}$. In S32 the module 10 sends to the engine 2 the reference address usr$_x$ of the record data table 1 and the reference address #(usr$_x$, psalt$_x$) of the record data table 3 in the database 11. The initial arrangement usrmatrix$_{x1}$ of symbols s$_1$1, s$_1$2, s$_1$3, s$_1$4...s$_1$36 is located in data table 3, and the encoded initial segment c1u$_x$ of the authentication code is located in data table 1 as #(salt1$_x$, c1u$_x$). It is understood that the initial authentication segment c1 u$_x$ is an encoded subset of the unique symbols s$_1$1, s$_1$2, s$_1$3, s$_1$4...s$_1$36 of the initial authentication arrangement usrmatrix$_{x1}$.

In S33, the authentication engine 2 generates initial candidate identification patterns inferred from an initial portion of the OTC and at least the initial array usermatrix$_{x1}$, preferably all the possible initial candidate identification patterns.

In S34, the authentication engine 2 encodes each of the initial candidate identification patterns using the one-way hashing function used in S11, using preferably salt1$_x$ provided as a data in data table 1, and compares each of them with the encoded initial segment c1u$_x$ of the authentication code, also encoded in S11 using salt1$_x$. A comparison in S35 is performed until a match, if any, can be found. In the example, the authentication engine 2 runs up to 1296 iterations of all possible MIP positions inferred by the first four digits of the OTC, to see if a match can be found with encoded record for c1u$_x$.

If no match is found in S35, authentication is failed, and the method is terminated in S50. If a match is found in S35, then, the device 3 processes a subsequent portion in S36 which then becomes the current portion.

The steps of validating the portions of the challenge code (OTC) are preferably performed sequentially, as this sequential validation is performed with the chained segments by the engine 2, or less preferably may be performed in parallel if the segments are not chained.

For each current portion of the OTC, the module 10 enables in S37 the authentication engine 2 to retrieve, as a function of at least the corresponding previous authentication segment (c1u$_x$ in our example):

at least one current authentication arrangement usrmatrix$_{x2}$, and
an uncorrelated current authentication segment c2u$_x$.

The sending in S37 is performed preferably also as a function of the user identification usr$_x$. Therefore preferably, in S37 the module 10 sends to the engine 2:

the reference address #($usr_x$, $salt2_x$, c1 $u_x$) of the record data table 4 in order to locate usrmatrix$_{x2}$, and

the reference address #($usr_x$, $salt1_x$, c1 $u_x$) of data table 2 containing $salt3_x$ and #($salt2_x$, $c2u_x$) in the database 11.

It is understood that the reference addresses to locate the records in data tables 2 and 4 are uncorrelated because of the use of different salts. The current usrmatrix$_{x2}$ of symbols $s_21$, $s_22$, $s_23$, $s_24...s_236$ is located in data table 4, and the encoded current segment $c2u_x$ of the authentication code is located in data table 1 as #($salt2_x$, $c2u_x$). It is understood that the current authentication segment $c2u_x$ is an encoded subset of the unique symbols $s_21$, $s_22$, $s_23$, $s_24...s_236$ of the current authentication arrangement usrmatrix$_{x2}$.

This means that in order to retrieve

on the one hand the encoded record for $c2u_x$, and
on the other hand the symbols matrix usrmatrix$_{x2}$ used to generate it,

different unique and uncorrelated reference addresses are required (i.e. #($usr_x$, $salt2_x$, $c1u_x$) and uncorrelated #($usr_x$, $salt1_x$, $c1u_x$)).

The reference address for where the encoded version of $c2u_x$ is located can therefore only be found if $c1u_x$ has already been matched, and it is understood that without $c2u_x$, authentication cannot occur.

As already stated, the symbols matrix usrmatrix$_{x2}$ used to generated $c2u_x$ is located at a reference equal to #($usr_x$, $salt2_x$, $c1u_x$). This means that there is no correlation between the location of the encoded record of $c2u_x$ (located at a reference equal to #($usr_x$, $salt1_x$, $c1u_x$)), and the symbols usrmatrix$_{x2}$ used to generate it.

The chained relationship of the segments is preferably reinforced by the fact that current salts, $salt1_x$ and $salt2_x$ in our example, used in S11 for encoding the current segment $c2u_x$ and in S39 (as explained below) for encoding the current portion corresponding to segment $c2u_x$ in data table 2 are stored with the previous authentication segment $c1u_x$ in data table 1, as #($salt1_x$, $c1u_x$). Also following salts, $salt2_x$ and $salt3_x$, used in S11 for encoding the following segment $c3u_x$ and in S39 (as explained below) for encoding the following portion corresponding to segment $c3u_x$ in data table 2 are stored with the current authentication segment $c2u_x$ in data table 1, as #($salt2_x$, $c2u_x$), etc. Therefore a previous segment needs to be previously validated so that a current segment can be processed and validated.

In S38, the authentication engine 2 generates current candidate identification patterns inferred from the current portion of the OTC and at least the corresponding symbols of the current array usermatrix$_{x2}$, preferably all the possible initial candidate identification patterns.

In S39, the authentication engine 2 encodes the current candidate identification patterns using the one-way hashing function used in S11, using preferably $salt3_x$ provided as a data in data table 3, and compares them with the encoded current segment $c2u_x$ of the authentication code, also encoded in S11 using $salt3_x$, the comparison being performed until a match, if any, can be found. In the example, the authentication engine 2 runs up to 1296 iterations of all possible MIP positions inferred by the four digits of the current portion of the OTC, to see if a match can be found with encoded record for $c2u_x$ in S40.

If no match is found in S40, authentication is failed, and the method is terminated in S50.

If a match is found in S40 and there are still portions to process (e.g. L=8 with N=4 with overlapping segments, or in the case of a MIP or OTC code length greater than 8 with N=4), then, the module 10 processes a subsequent portion in S36, as a third segment $c3u_x$ is needed, together with an additional salt, $salt4_x$. In this case, after $c2u_x$ has been matched, $c2u_x$ is used in the same way as $c1u_x$ above in order to generate the unique references that point to the encoded record of $c3u_x$, and the symbols matrix used to generate $c3u_x$. In principle this approach could continue to even longer MIPs.

If a match is found in S40 and there are no further portions to process, then, the authentication succeeds in S41.

Thus even if someone was to copy or steal the four data tables, it would be nearly impossible to associate the correct symbols with the correct segments, and in the right sequence in order to assemble all the information needed to achieve authentication.

Another aspect of the invention will now be described with reference to Figure 8.

The authentication code is divided into at least two segments, and the segments can be processed by an authentication engine 2 in an acceptable period of time, whilst still achieving acceptable at least offline security. Therefore the invention enables the use of MPA of square form factors and with MIP of a length L with L≥6.

In some aspects of the invention, each authentication arrangement 100 has a square form factor a, wherein

$$a \geq 6$$

with a being a linear dimension of the matrix, each matrix having a size S equal to $a^2$ elements 101.

The invention can be applied to an optimal family of matrices of length (or size) S, wherein a balance between the uniqueness of signs s (providing a high level of entropy) and non-reversability of the OTC (given by the duplication of the signs s) is given by the solution of equation (E2):

$$n = \frac{S}{n} \text{ (E2)}$$

where n is the number of times each different type of signs are replicated in each challenge arrangement 200, and S/n is the number of different signs in each challenge arrangement 200 (also referred to as m below).

The solution of (E2) is:

$$n = \sqrt{S}$$

Therefore preferably each challenge arrangement 200 has a square form factor a, wherein

$$m = n = a$$

and

$$a \geq 6$$

with a being a linear dimension of the matrix, each matrix having a size S equal to $a^2$ elements 201;
m (=S/n) being the number of different signs in each challenge arrangement 200; and
n being the number of times each different type of signs are replicated in each challenge arrangement 200.

The MPA according to the invention has better practical entropy compared to a one dimensional linear array or arrangement.
As stated above, the invention enables the use of an ideal configuration which has a square pattern and is therefore advantageous compared to a rectangular array which tends to suppress entropy.
Also as stated above, the invention enables the use of the ideal configuration where each symbol of the challenge matrix is repeated n=sqrt(S) times, where S is the number of elements (or the size) in the challenge matrix. Thus, it is desirable that a matrix has a number of elements that is a square number, i.e. 4, 9, 16, 25, 36, 49, 64, 81 etc. This is to ensure that signs in a matrix are repeated an integer number of times, with no bias in favour of any particular sign. Such a bias would compromise security effectiveness.

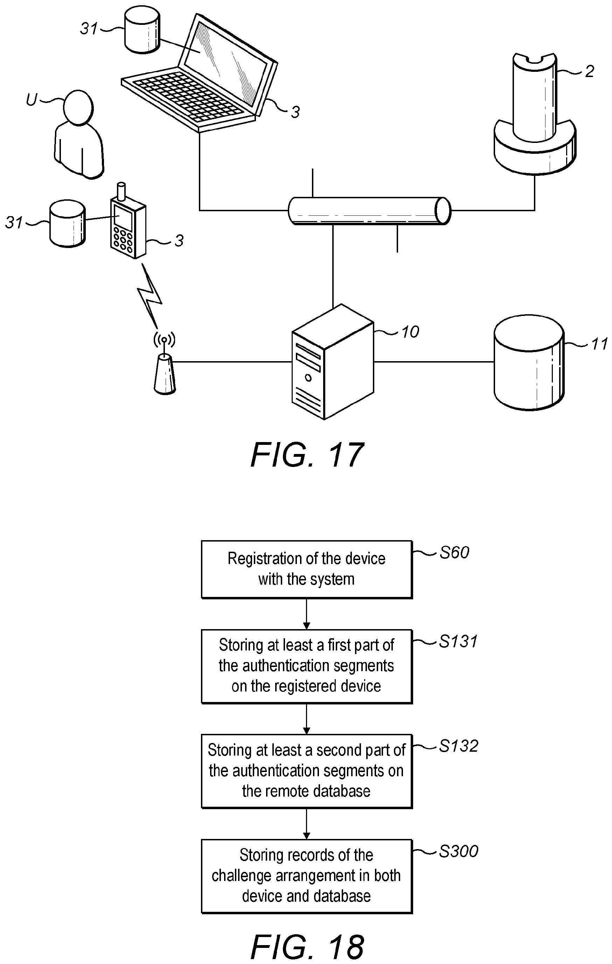

However the invention is not limited to $n = \sqrt{S}$. The use of m unique signs, with m ≠ n ≠ a is also possible and sometimes advantageous. For example, in a matrix with a = 6 (36 elements), the case m = 9, with n = 4 (each of the nine signs is repeated four times) is also possible and sometimes advantageous. Other examples for a, m or n are possible.
Preferably "a" is an integer number between six and ten, for example nine unique signs in a 9x9 matrix, and so on.
Therefore a 36 element array with 6 unique different signs with each sign being repeated six times (i.e. a 6 x 6 x 6 x 6 configuration) with a six element MIP is the minimum configuration that has sufficient entropy, having the further advantage of having the property that the probability of guessing a correct OTC (i.e. 1/46,656) is much better than guessing a conventional four-digit PIN number.
In the developments above, the authentication operation only takes into account the OTC entered and transmitted by the user U to the system. It is therefore sometimes referred to as a one-factor system. Even if the authentication segments are stored in different and independent records, e.g. in data table 1 and data table 2, all the records are preferably stored in the database 11.
In other examples, at least a part of the authentication segments and/or at least a corresponding part of the portions of the OTC are stored on the device 3.
Another aspect of the invention will now be described with reference to Figure 17.
The authentication operation performed on the system of Figure 17 not only takes into account the OTC entered and transmitted by the user U to the system, but also device identification. It is therefore sometimes referred to as a two-factor system. The invention has therefore the advantage that even if a hacker knows the MIP of the user U, the OTC will not be validated if the OTC is not entered on the device identified to the system.

Preferably, both a type of device and/or a selected device and a type of authentication operation and/or a selected authentication operation are user-configurable or operator-configurable. The user U may therefore e.g. choose one of his registered devices 3 for authentication regarding bank transactions and another one of his registered devices 3 for online payments. The operator may also e.g. ban a type of devices for highly secure transactions.

The registration of the device with the system comprises at least transmitting identification of the device 3 to the processing module 10.

Identification of the device 3 may comprise any unique identification, hereafter referred to as $H_{ID}$, such as a serial number of any part of the device and/or an International Mobile Equipment Identity (IMEI), etc.

The transmitting of the identification may be performed via e.g. at least one of the following channels:

a communication channel complying with known Secure Socket Layer (SSL) or Transport Layer Security (TLS) protocols;

a mobile communication channel, such as Global System for Mobile Communications (GSM) or Universal Mobile Telecommunications System (UMTS), where identification is transmitted via a Short Message Service (SMS) or a Multimedia Messaging Service (MMS);

a paper/written channel, where the user U provides to an operator of the system the identification of his device via mail or email, and where the operator of the system enters the identification of the device for storing in the database 11; or

a voice channel, where the user U provides to an operator of the system the identification of his device orally, for instance via a telephone call, and where the operator of the system enters the identification of the device for storing in the database 11.

The processing module 10 then registers identification of the device 3 in the database 11, as an independent and secure record. The identification of the device is then used in the authentication process

Preferably, the unique hardware ID $H_{ID}$ is appended to the segments, c1, c2, c3 prior to encoding. This means that the unique hardware ID is never stored unencrypted in any of the data tables. During authentication, the unique hardware is input to S33, such that it may be incorporated in the matching process when S33 generates candidate values for c1, etc.

In some aspects of the invention, a part of the method may be performed locally on the device 3, as will now be described with reference to Figure 18.

In S60, the device 3 is registered with the system, as explained above.

Once the device 3 is registered with the authentication system, the steps of processing the authentication code are the same as already described in reference to Figures 7 to 12, and are not repeated here for the sake of conciseness and clarity.

S13 is however modified into S131 and S132. In S131, the module 10 stores at least a first part of the authentication segments on the registered device 3. For example, if the authentication code is divided in two segments, then one segment is stored in a memory 31 of the device 3, and if the authentication code is divided in three segments, then at least one segment is stored in the memory 31 of the device 3. In S132, the module 10 stores at least a second part of the authentication segments on the remote database 11. For example, if the authentication code is divided in two segments, then one segment is stored in the database 11, and if the authentication code is divided in three segments and one segment is stored on the memory 31, then two segments are stored in the database 11.

The steps of processing the OTC and authenticating the user U are the same as already described in reference to Figures 13 to 16, and are not repeated here for the sake of conciseness and clarity.

S30 is however modified into S300, where a record of the challenge arrangement 200 presented to the user U is stored in the database 11 and in the memory 31 of the device 3. This enables also the device 3 to perform locally at least some of S33 and/or S38, in order to generate at least candidate identification patterns corresponding to at least one portion of the OTC, e.g. by associating the signs of the portions with corresponding unique symbols of the authentication arrangement 100, using the record of the challenge arrangement 200 stored in the memory 31 and providing all the positions of the signs in the challenge arrangement 200. It is understood that the authentication engine 2 also performs at least a part of S33 and/or S38, using the record of the challenge arrangement 200 stored in the database 11. It is also understood that a first part of the portions, corresponding to the first part of the segments, is also stored at least temporarily on the device 3 during an authentication operation.

This enhances the two-factor feature of the system and method.

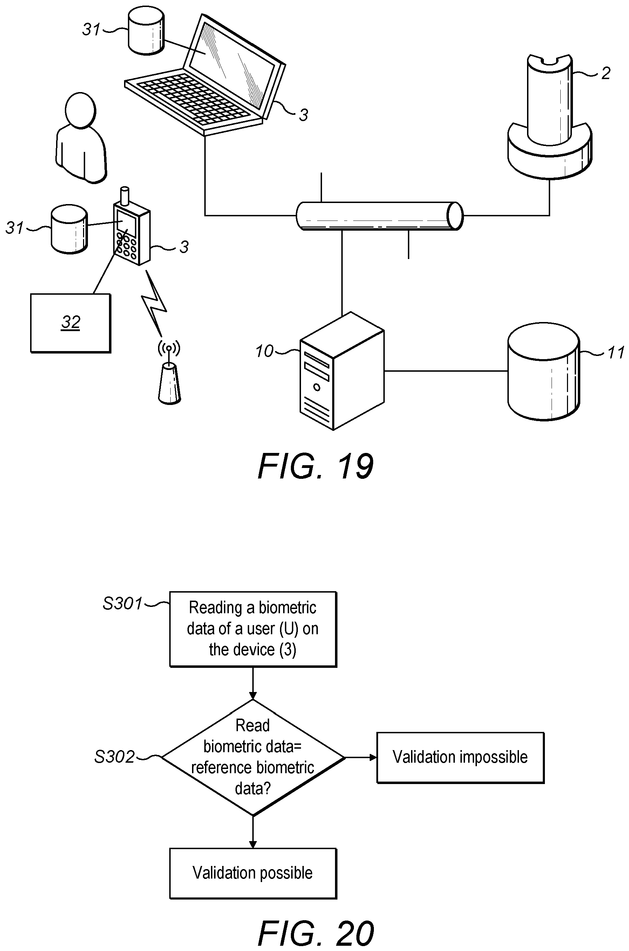

In some aspects, the system may be a three-factor system, as will now be described with reference to Figure 19.

The system and device 3 of Figure 19 are similar to the system and device of Figure 17, and are not fully described here for the sake of conciseness and clarity.

However, the device 3 preferably comprises a module 32, adapted for reading and recognizing a biometric data from the user U.

The authentication operation of Figure 20 performed on the system of Figure 19 not only takes into account the OTC entered and transmitted by the user U to the system and the device identification of the device on which the OTC is entered, but also a biometric data from the user U. That is why it is therefore referred to as a three-factor system. The invention has therefore the advantage that even if a hacker knows the MIP of the user U and has the registered device on which the OTC must be entered, the OTC will not be validated if the biometric data is not entered on the device identified to the system.

The steps of processing the authentication code and the OTC are the same as already described in reference to Figure 18, and are not repeated here for the sake of conciseness and clarity.

In the method of Figure 20 however S300 is modified in S301 and S302. In S301 the device 3 reads a biometric data of the user U, using the module 32. In S301, the read biometric data is compared with a reference biometric data.

Validation of the first part of the portions of the OTC can only occur if the read biometric data matches the reference biometric data.

Preferably, the reference biometric data is not stored on the database 11, but stored locally on the device 3. Therefore the operator of the system does not store any unnecessary personal information regarding the user U, and no large databases containing many instances of biometric data need to be used.

The biometric data maybe a voice and/or a shape of the face and/or the image of the iris, and/or a fingerprint of the user U.

Preferably, the challenge matrix 200 is displayed on the device 3.

Preferably, the user U reads aloud the OTC he wants to enter, and the module 32 of the registered device 3 recognizes both the signs (or digits) of the OTC (using known dictation recognition techniques) and the voice of the user U, for processing and validation. This system is therefore very advantageous, since

(i) it comprises all the advantages of security of the MIP in a MPA configuration (it is something that only the user knows),
(ii) the authentication can be only performed on the registered device (it is something that only the user has)
(iii) the authentication can be only performed by the user himself (it is someone only the user is).

This system is also very convenient because the voice and digit recognition are performed concomitantly on the device 3.

Alternatively, the user enters the OTC he wants to enter by touching a finger-print enabled keypad, such that the user's fingerprint is read as he types in the OTC. This system shares many of the advantages of the voice recognition system described above, in that the reading of the user's finger print, and recognition of the OTC are performed concomitantly on the device 3.

The system has numerous applications, and can be associated with any type of key code lock, the lock being either an electronic lock (for locking a transaction) or a mechanical lock (for locking a door or the opening of any device).

The present invention may be applied to any form of secret information, and the authentication code described above may be any secret information, such as passwords, passcodes, and personal information, including biometric information, where segmenting, chaining and storing the secret information on different locations preferably not relying on a single large database that can be compromised.

It is understood that the authentication code described in the specification is not limited to an authentication code derived from a MPA. The authentication code of a user may further be any type of password, number, ID, etc. It is understood that the processing of the authentication codes and challenge codes, such as the dividing, chaining, generating candidate portions (such as candidate identification patterns or other types of identification candidates), encoding and storing according to the disclosure may be performed on any type of such authentication code and challenge codes.

***Modifications and Alternatives***

Detailed embodiments have been described above. As those skilled in the art will appreciate, a number of modifications and alternatives can be made to the above embodiments whilst still benefiting from the inventions embodied therein.

In the embodiments described above, the processing module and the authentication engine are typically implemented as software run by the corresponding controller. However, in some embodiments, the processing module and the authentication engine may be formed, where appropriate, by hardware, software, firmware or any combination thereof. A software implementation may however be preferred to facilitate the updating of the functionality of a processing module or an authentication engine.

Where software are provided, they may be provided, as appropriate, in compiled or un-compiled form and may be supplied to the processing module, the authentication engine or to the device, as the case may be, as a signal over a computer or telecommunications network, or on a computer storage medium such as for instance a disc, an optical disc or a CD ROM.

It should of course be appreciated that, although not explicitly shown in Figure 6, the processing module and the authentication engine will have all of the functionality necessary to enable them to operate as the processing module and the authentication engine, respectively, in the particular system in which they are designed to function.

Various other modifications will be apparent to those skilled in the art and will not be described in further detail here.

**Claims**

1.  A method of authentication of a user (U), comprising the steps of:

    obtaining (S1, S2) an authentication code of a user, the authentication code comprising at least six elements based on a memorable identification pattern, MIP, associated with at least one authentication arrangement (100), dividing (S10) the authentication code into at least two authentication segments (c1, c2, c3) each forming a subset of the elements of the authentication code (MIP);
    encoding (S11) each of the authentication segments (c1, c2, c3) using a one-way hashing function (SHA-2);
    storing (S13) the encoded authentication segments ($c1u_x$, $c2u_x$, $c3u_x$) for use in a validation;
    obtaining (S30) a challenge code (OTC) from the user, the challenge code being based on a pattern associated with at least one challenge arrangement (200) comprising duplicated signs (201),
    dividing (S31) the challenge code (OTC) into at least two portions, each corresponding to an authentication segments (c1, c2, c3) respectively;
    generating (S33) candidate identification patterns corresponding to at least one portion of the challenge code (OTC);
    encoding (S34, S39) the candidate identification patterns using the one-way hashing function (SHA-2); and
    validating (S34, S35, S39, S40) the at least one portion of the challenge code (OTC) if at least one encoded candidate identification pattern matches a corresponding encoded authentication segment; and
    validating (S41) the challenge code (OTC) only if each portion of the challenge code (OTC) corresponding to an authentication segments is validated.

2.  A method of storing an authentication code of a user in a system for authentication of a user (U), comprising the steps of:

    obtaining (S1, S2) an authentication code of a user, the authentication code comprising at least six elements based on a memorable identification pattern, MIP, associated with at least one authentication arrangement (100), dividing (S10) the authentication code into at least two authentication segments (c1, c2, c3) each forming a subset of the elements of the authentication code (MIP);
    encoding (S11) each of the authentication segments (c1, c2, c3) using a one-way hashing function (SHA-2);
    storing the encoded authentication segments ($c1u_x$, $c2u_x$, $c3u_x$) for use in a validation.

3.  A method of authenticating a user using an authentication code of the user in a system for authentication of the user (U), comprising the steps of:

    obtaining (S30) a challenge code (OTC) from the user, the challenge code comprising at least six elements and being based on a pattern associated with at least one challenge arrangement (200) comprising duplicated signs (201),
    dividing (S31) the challenge code (OTC) into at least two portions;
    generating (S33) candidate identification patterns corresponding to at least one portion of the challenge code (OTC);
    encoding (S34, S39) the candidate identification patterns using the one-way hashing function (SHA-2); and
    validating (S34, S35, S39, S40) the at least one portion of the challenge code (OTC) if at least one encoded candidate identification pattern matches a corresponding encoded authentication segment; and
    validating (S41) the challenge code (OTC) only if all the portions of the challenge code (OTC) are validated.

**4.** The method according to any one of claims 1 to 3, wherein the authentication code is divided (S10) into segments of N elements, with

$$4 \leq N \leq 5;$$

or wherein the challenge code is divided (S31) into portions of N elements, with

$$4 \leq N \leq 5$$

**5.** The method according to any one of claims 1 to 4, wherein the segments and the corresponding portions overlap at least partially, thereby presenting some redundancy between each other.

**6.** The method according to any one of claims 1 to 5, wherein the segments are chained, optionally wherein a current salt $(salt1_x)$, used for encoding a current segment $(c2u_x)$ is stored with a previous authentication segment $(c1u_x)$, so that the previous authentication segment $(c1u_x)$ needs to be previously validated so that the current segment $(c2u_x)$ can be processed and validated, or

wherein the segments have different lengths compared to each other, optionally wherein the first segment is longer than the other following chained segments.

**7.** The method according to any one of claims 1 to 6, wherein, the at least one authentication arrangement (100) comprises symbols (s1, s2, s3, s4...s36), preferably being unique, and wherein:

a randomly generated code (s1, s2, s3...s36) is assigned (S1) to each symbol of the authentication arrangement $(usrmatrix_{x1}; usrmatrix_{x2})$, and
each randomly generated code (s1, s2, s3...s36) is stored (S2) in a database (11), optionally wherein:

for each authentication segment (c1, c2, c3) and for each authentication arrangement $(usrmatrix_{x1}; usrmatrix_{x2})$, a different randomly generated code $(s_11, s_12, s_13...s_136; s_21, s_22, s_23...s_236)$ is assigned (S1) to each symbol of the authentication arrangement $(usrmatrix_{x1}; usrmatrix_{x2})$, so that the authentication segments (c1, c2, c3) each comprise respectively at least one element corresponding to different authentication arrangements $(usrmatrix_{x1}; usrmatrix_{x2})$, optionally wherein
the authentication arrangements $(usrmatrix_{x1}; usrmatrix_{x2})$ of randomly generated codes and the corresponding encoded segments $(c1u_x, c2u_x)$ are stored as different uncorrelated records in the database (11), optionally wherein
each randomly generated code (s1, s2, s3...s36) has a length greater than 256 bits, in order to minimize the probability of the same code being generated to represent different symbols.

**8.** The method according to any one of claims 1 to 7, wherein at least one of the following:

a user identification, and/or
a user name $(usr_x)$, and/or
a private salt (psalt) used in the one-way hashing function (SHA-2), and/or
each encoded authentication segment $(c1u_x, c2u_x)$, and/or
cryptographic salts $(salt1_x, salt2_x, salt3_x, salt4_x)$ used in the one-way hashing function with a user name or identification in connection with the encoded segments, and/or each authentication arrangement (100; $usrmatrix_{x1}; usrmatrix_{x2})$,
is stored (S13) as different uncorrelated records in a database (11), or
comprising the steps of:

enabling (S32, S37) retrieving, as a function of a user identification $(usr_x)$ or at least an encoded authentication segment $(c1u_x)$:

at least one authentication arrangement $(usrmatrix_{x1}, usrmatrix_{x2})$, and
an encoded authentication segment $(c1u_x, c2u_x)$ of the authentication code, wherein the retrieved

# EP 2 883 183 B1

encoded authentication segment ($c1u_x$, $c2u_x$) is based on symbols ($s_1 1$, $s_1 2$, $s_1 3 ... s_1 36$; $s_2 1$, $s_2 2$, $s_2 3 ... s_2 36$) of the retrieved authentication arrangement ($usrmatrix_{x1}$, $usrmatrix_{x2}$), and

generating (S33) at least a candidate identification pattern by associating signs of a portion of the challenge code with corresponding symbols ($s_1 1$, $s_1 2$, $s_1 3 ... s_1 36$ $s_2 1$, $s_2 2$, $s_2 3 ... s_2 36$) of the authentication arrangement ($usrmatrix_{x1}$, $usrmatrix_{x2}$).

9. The method according to any one of claims 1 to 8, wherein the steps of validating (S34, S35, S39, S40) the portions of the challenge code (OTC) are performed preferably sequentially, or in parallel, optionally wherein the challenge code is invalidated as soon as no match is found for all the candidate identification patterns of a portion of the challenge code.

10. The method according to any one of claims 1 to 9, wherein the obtained (S1, S2) authentication code is discarded as soon as the encoded authentication segments ($c1u_x$, $c2u_x$, $c3u_x$) are stored (S13), or wherein, if each authentication arrangement (100) comprises S symbols (s1, s2, s3, s4...s36), with S$\geq$30, and if N is a predetermined number of elements in each authentication segment, N is such that:

$$\left(\sqrt{S}\right)^{N} < 46656 ,$$

or wherein, if each authentication arrangement (100) comprises S symbols (s1, s2, s3, s4...s36), with S$\geq$30, and if N is a predetermined number of elements in each authentication segment, N is such that:

$$\left(\sqrt{S}\right)^{N} \times t < 5$$

with t a time, in seconds, of processing an encoding operation by a processor, using a one-way hashing function (SHA-2).

11. The method according to any one of claims 1 to 10, wherein at least one authentication arrangement (100) and/or at least one challenge arrangement (200) is a matrix used in a matrix pattern authentication, MPA, optionally wherein

each challenge arrangement (200) has a square form factor a, and wherein

$$m = n = a$$

and

$$a \geq 6$$

with a being a linear dimension of the matrix, each matrix having a size S equal to $a^2$ elements (201); m being the number of different signs in each challenge arrangement (200); and n being the number of times each different type of signs is replicated in each challenge arrangement (200), or optionally wherein
each challenge arrangement has a square form factor a, and

$$m \neq n \neq a$$

and

$$a \geq 6$$

25

with a being a linear dimension of the matrix, each matrix having a size S equal to $a^2$ elements;

m being the number of different signs in each challenge arrangement; and

n being the number of times each different type of signs is replicated in each challenge arrangement, optionally wherein

each authentication arrangement (100) has a square form factor a, and wherein

$$a \geq 6$$

with a being a linear dimension of the matrix, each matrix having a size S equal to $a^2$ elements (101).

12. A system comprising means (10, 2, 11) comprising a processing module, an authentication engine and a database configured to:

obtain (S1, S2) an authentication code of a user, the authentication code comprising at least six elements based on a memorable identification pattern, MIP, associated with at least one authentication arrangement (100), divide (S10) the authentication code into at least two authentication segments (c1, c2, c3) each forming a subset of the elements of the authentication code (MIP);

encode (S11) each of the authentication segments (c1, c2, c3) using a one-way hashing function (SHA-2);

store (S13) the encoded authentication segments ($c1u_x$, $c2u_x$, $c3u_x$) for use in a validation;

obtain (S30) a challenge code (OTC) from the user, the challenge code being based on a pattern associated with at least one challenge arrangement (200) comprising duplicated signs (201),

divide (S31) the challenge code (OTC) into at least two portions, each corresponding to an authentication segments (c1, c2, c3) respectively;

generate (S33) candidate identification patterns corresponding to at least one portion of the challenge code (OTC);

encode (S34, S39) the candidate identification patterns using the one-way hashing function (SHA-2); and

validate (S34, S35, S39, S40) the at least one portion of the challenge code (OTC) if at least one encoded candidate identification pattern matches a corresponding encoded authentication segment; and

validate (S41) the challenge code (OTC) only if each portion of the challenge code (OTC) corresponding to an authentication segments is validated.

13. A system comprising means (11, 10, 2) configured to:

obtain (S1, S2) an authentication code of a user, the authentication code comprising a plurality of unique elements,

divide (S10) the authentication code into at least two authentication segments each forming a subset of the elements of the authentication code;

encode (S11) each of the authentication segments (c1, c2, c3) so that the authentication segments cannot be retrieved from the encoded authentication segments ($c1u_x$, $c2u_x$, $c3u_x$); and

store (S13) the encoded authentication segments ($c1u_x$, $c2u_x$, $c3u_x$) for use in a validation in at least one record of a database (11),

wherein the at least two authentication segments are stored in different and independent records in the database (11).

14. A system comprising means (11, 10, 2) configured to:

obtain (S1, S2) an authentication code of a user, the authentication code comprising a plurality of unique elements,

divide (S10) the authentication code into at least two authentication segments each forming a subset of the elements of the authentication code;

encode (S11) each of the authentication segments (c1, c2, c3) so that the authentication segments cannot be retrieved from the encoded authentication segments ($c1u_x$, $c2u_x$, $c3u_x$); and

store (S13) the encoded authentication segments ($c1u_x$, $c2u_x$, $c3u_x$) for use in a validation in at least one record of a database (11);

wherein encoding (S11) each of the authentication segments uses a one-way hashing function (SHA-2) using a salt, and
wherein the authentication segments are chained such that
a previous authentication segment ($c1u_x$) is stored in a first record of the database (11), and
a current salt ($salt1_x$), used for encoding a current segment ($c2u_x$) stored in a second record of the database (11), is stored in the first record of the database (11) along with the previous authentication segment ($c1u_x$),

so that the previous authentication segment ($c1u_x$) needs to be previously validated so that the current segment ($c2u_x$) can be validated.

15. A computer program, computer program product or computer readable medium comprising instructions for carrying out a method according to any of claims 1 to 11.


**Patentansprüche**

1. Verfahren zum Authentifizieren eines Benutzers (U), das die folgenden Schritte beinhaltet:

Einholen (S1, S2) eines Authentifikationscode eines Benutzers, wobei der Authentifikationscode wenigstens sechs Elemente auf der Basis eines mit wenigstens einer Authentifikationsanordnung (100) assoziierten einprägsamen Identifikationsmusters MIP umfasst,
Unterteilen (S10) des Authentifikationscode in wenigstens zwei Authentifikationssegmente (c1, c2, c3), die jeweils einen Teilsatz der Elemente des Authentifikationscode (MIP) bilden;
Encodieren (S11) jedes der Authentifikationssegmente (c1, c2, c3) mit einer Einweg-Hash-Funktion (SHA-2);
Speichern (S13) der encodierten Authentifikationssegmente ($c1u_x$, $c2u_x$, $c3u_x$) zur Verwendung bei einer Validierung;
Einholen (S30) eines Challenge-Code (OTC) vom Benutzer, wobei der Challenge-Code auf einem Muster basiert, das mit wenigstens einer Challenge-Anordnung (200) assoziiert ist, die duplizierte Zeichen (201) umfasst,
Unterteilen (S31) des Challenge-Code (OTC) in wenigstens zwei Abschnitte, die jeweils einem Authentifikationssegment (c1, c2, c3) entsprechen;
Erzeugen (S33) von Kandidatenidentifikationsmustern, die wenigstens einem Teil des Challenge-Code (OTC) entsprechen;
Encodieren (S34, S39) der Kandidatenidentifikationsmuster mit der Einweg-Hash-Funktion (SHA-2); und
Validieren (S34, S35, S39, S40) des wenigstens einen Teils des Challenge-Code (OTC), wenn wenigstens ein encodiertes Kandidatenidentifikationsmuster mit einem entsprechenden encodierten Authentifikationssegment übereinstimmt; und
Validieren (S41) des Challenge-Code (OTC) nur dann, wenn jeder Teil des Challenge-Code (OTC), der einem Authentifikationssegment entspricht, validiert ist.

2. Verfahren zum Speichern eines Authentifikationscode eines Benutzers in einem System zum Authentifizieren eines Benutzers (U), das die folgenden Schritte beinhaltet:

Einholen (S1, S2) eines Authentifikationscode eines Benutzers, wobei der Authentifikationscode wenigstens sechs Elemente umfasst, auf der Basis eines einprägsamen Identifikationsmusters MIP, das mit wenigstens einer Authentifikationsanordnung (100) assoziiert ist,
Unterteilen (S10) des Authentifikationscode in wenigstens zwei Authentifikationssegmente (c1, c2, c3), die jeweils einen Teilsatz der Elemente des Authentifikationscode (MIP) bilden;
Encodieren (S11) jedes der Authentifikationssegmente (c1, c2, c3) mit einer Einweg-Hash-Funktion (SHA-2);
Speichern der encodierten Authentifikationssegmente ($c1u_x$, $c2u_x$, $c3u_x$) zur Verwendung bei einer Validierung.

3. Verfahren zum Authentifizieren eines Benutzers mit einem Authentifikationscode des Benutzers in einem System zum Authentifizieren des Benutzers (U), das die folgenden Schritte beinhaltet:

Einholen (S30) eines Challenge-Code (OTC) von dem Benutzer, wobei der Challenge-Code wenigstens sechs Elemente umfasst und auf einem Muster basiert, das mit wenigstens einer Challenge-Anordnung (200) assoziiert ist, die duplizierte Zeichen (201) umfasst,
Unterteilen (S31) des Challenge-Code (OTC) in wenigstens zwei Teile;
Erzeugen (S33) von Kandidatenidentifikationsmustern, die wenigstens einem Teil des Challenge-Code (OTC) entsprechen;
Encodieren (S34, S39) der Kandidatenidentifikationsmuster mit der Einweg-Hash-Funktion (SHA-2); und
Validieren (S34, S35, S39, S40) des wenigstens einen Teils des Challenge-Code (OTC), wenn wenigstens ein encodiertes Kandidatenidentifikationsmuster mit einem entsprechenden encodierten Authentifikationssegment übereinstimmt; und
Validieren (S41) des Challenge-Code (OTC) nur dann, wenn alle Teile des Challenge-Code (OTC) validiert sind.

4. Verfahren nach einem der Ansprüche 1 bis 3, wobei der Authentifikationscode in Segmente von N Elementen unterteilt wird (S10), wobei

$$4 \leq N \leq 5;$$

oder wobei der Challenge-Code in Teile von N Elementen unterteilt wird (S31), wobei

$$4 \leq N \leq 5.$$

5. Verfahren nach einem der Ansprüche 1 bis 4, wobei die Segmente und die entsprechenden Teile wenigstens teilweise überlappen, um dadurch etwas Redundanz untereinander zu präsentieren.

6. Verfahren nach einem der Ansprüche 1 bis 5, wobei die Segmente verkettet sind, wobei optional ein aktuelles Salt (salt1$_x$), das zum Encodieren eines aktuellen Segments (c2u$_x$) verwendet wird, mit einem vorherigen Authentifikationssegment (c1u$_x$) gespeichert wird, so dass das vorherige Authentifikationssegment (c1u$_x$) zuvor validiert werden muss, so dass das aktuelle Segment (c2u$_x$) verarbeitet und validiert werden kann, oder
wobei die Segmente unterschiedliche Längen im Vergleich zueinander haben, wobei optional das erste Segment länger ist als die anderen folgenden verketteten Segmente.

7. Verfahren nach einem der Ansprüche 1 bis 6, wobei die wenigstens eine Authentifikationsanordnung (100) Symbole (s1, s2, s3, s4...s36) umfasst, die vorzugsweise eindeutig sind, und wobei:

jedem Symbol der Authentifikationsanordnung (usrmatrix$_{x1}$; usrmatrix$_{x2}$) ein zufällig erzeugter Code (s1, s2, s3...s36) zugeordnet wird (S1), und
jeder zufällig erzeugte Code (s1, s2, s3...s36) in einer Datenbank (11) gespeichert wird (S2), wobei optional:

für jedes Authentifikationssegment (c1, c2, c3) und für jede Authentifikationsanordnung (usrmatrix$_{x1}$; usrmatrix$_{x2}$) ein anderer zufällig erzeugter Code (s$_1$1, s$_1$2, s$_1$3...s$_1$36; s$_2$1, s$_2$2, s$_2$3...s$_2$36) jedem Symbol der Authentifikationsanordnung (usrmatrix$_{x1}$; usrmatrix$_{x2}$) zugeordnet wird (S1), so dass die Authentifikationssegmente (c1, c2 c3) jeweils wenigstens ein Element umfassen, das anderen Authentifikationsanordnungen (usrmatrix$_{x1}$; usrmatrix$_{x2}$) entspricht, wobei optional
die Authentifikationsanordnungen (usrmatrix$_{x1}$; usrmatrix$_{x2}$) von zufällig erzeugten Codes und die entsprechenden encodierten Segmente (c1u$_x$, c2u$_x$) als unterschiedliche unkorrelierte Datensätze in der Datenbank (11) gespeichert werden, wobei optional
jeder zufällig erzeugte Code (s1, s2, s3...s36) eine Länge von mehr als 256 Bit hat, um die Wahrscheinlichkeit zu minimieren, dass derselbe Code zum Repräsentieren anderer Symbole erzeugt wird.

8. Verfahren nach einem der Ansprüche 1 bis 7, wobei wenigstens eines der Folgenden gilt:

eine Benutzeridentifikation, und/oder
ein Benutzername (usr$_x$), und/oder
ein privates Salt (psalt), das in der Einweg-Hash-Funktion (SHA-2) benutzt wird, und/oder
jedes encodierte Authentifikationssegment (c1u$_x$, c2u$_x$), und/oder
kryptografische Salts (salt1$_x$, salt2$_x$, salt3$_x$, salt4$_x$), die in der Einweg-Hash-Funktion mit einem/r Benutzernamen oder -identifikation in Verbindung mit den encodierten Segmenten benutzt wird, und/oder jede Authentifikationsanordnung (100; usrmatrix$_{x1}$; usrmatrix$_{x2}$) als unterschiedliche unkorrelierte Datensätze in einer Datenbank (11) gespeichert wird (S13), oder
das die folgenden Schritte beinhaltet:

Ermöglichen (S32, S37) des Abrufens, in Abhängigkeit von einer Benutzeridentifikation ($usr_x$) oder von wenigstens einem encodierten Authentifikationssegment ($c1u_x$):

wenigstens einer Authentifikationsanordnung ($usrmatrix_{x1}$; $usrmatrix_{x2}$), und
eines encodierten Authentifikationssegments ($c1u_x$, $c2u_x$) des Authentifikationscode, wobei das abgerufene encodierte Authentifikationssegment ($c1u_x$, $c2u_x$) auf Symbolen ($s_11$, $s_12$, $s_13...s_136$; $s_21$, $s_22$, $s_23...s_236$) der abgerufenen Authentifikationsanordnung ($usrmatrix_{x1}$; $usrmatrix_{x2}$) basiert, und

Erzeugen (S33) wenigstens eines Kandidatenidentifikationsmusters durch Assoziieren von Zeichen eines Teils des Challenge-Code mit entsprechenden Symbolen ($s_11$, $s_12$, $s_13...s_136$; $s_21$, $s_22$, $s_23...s_236$) der Authentifikationsanordnung ($usrmatrix_{x1}$; $usrmatrix_{x2}$).

9. Verfahren nach einem der Ansprüche 1 bis 8, wobei die Schritte des Validierens (S34, S35, S39, S40) der Teile des Challenge-Code (OTC) vorzugsweise sequentiell oder parallel durchgeführt werden, wobei optional der Challenge-Code ungültig wird, sobald keine Übereinstimmung für alle Kandidatenidentifikationsmuster eines Teils des Challenge-Code gefunden wird.

10. Verfahren nach einem der Ansprüche 1 bis 9, wobei der eingeholte (S1, S2) Authentifikationscode verworfen wird, sobald die encodierten Authentifikationssegmente ($c1u_x$, $c2u_x$, $c3u_x$) gespeichert werden (S13), oder wobei, wenn jede Authentifikationsanordnung S Symbole (s1, s2, s3, s4...s36) umfasst, wobei $S \geq 30$ ist, und wenn N eine vorbestimmte Anzahl von Elementen in jedem Authentifikationssegment ist, N so ist, dass:

$$\left(\sqrt{S}\right)^N < 46656 \text{ ,}$$

oder
wobei, wenn jede Authentifikationsanordnung (100) S Symbole (s1, s2, s3, s4...s36) umfasst, wobei $S \geq 30$ ist, und wenn N eine vorbestimmte Anzahl von Elementen in jedem Authentifikationssegment ist, N so ist, dass:

$$\left(\sqrt{S}\right)^N \times t < 5$$

wobei t eine Zeit, in Sekunden, der Verarbeitung eines Encodiervorgangs durch einen Prozessor mit einer Einweg-Hash-Funktion (SHA-2) ist.

11. Verfahren nach einem der Ansprüche 1 bis 10, wobei wenistens eine Authentifikationsanordnung (100) und/oder wenigstens eine Challenge-Anordnung (200) eine Matrix ist, die in einer Matrixmusterauthentifikation MPA benutzt wird, wobei optional
jede Challenge-Anordnung (200) einen quadratischen Formfaktor a hat, und wobei

$$m = n = a$$

und

$$a \geq 6$$

wobei a eine lineare Dimension der Matrix ist, wobei jede Matrix eine Größe S gleich $a^2$ Elementen (201) hat;
wobei m die Anzahl von unterschiedlichen Zeichen in jeder Challenge-Anordnung (200) ist; und
wobei n die Häufigkeit ist, mit der jeder unterschiedliche Typ von Zeichen in jeder Challenge-Anordnung (200) repliziert wird, oder wobei optional
jede Challenge-Anordnung einen quadratischen Formfaktor a hat, und

$$m \neq n \neq a$$

und

$$a \geq 6$$

wobei a eine lineare Dimension der Matrix ist, wobei jede Matrix eine Größe S gleich $a^2$ Elementen hat;
wobei m die Anzahl von unterschiedlichen Zeichen in jeder Challenge-Anordnung ist; und
wobei n die Häufigkeit ist, mit der jeder unterschiedliche Typ von Zeichen in jeder Challenge-Anordnung repliziert wird, wobei optional
jede Authentifikationsanordnung (100) einen quadratischen Formfaktor a hat, und wobei

$$a \geq 6$$

wobei a eine lineare Dimension der Matrix ist, wobei jede Matrix eine Größe S gleich $a^2$ Elementen (101) hat.

12. System, das Mittel (10, 2, 11) umfasst, die ein Verarbeitungsmodul, eine Authentifizierungsmaschine und eine Datenbank umfasst, konfiguriert zum:

Einholen (S1, S2) eines Authentifikationscode eines Benutzers, wobei der Authentifikationscode wenigstens sechs Elemente auf der Basis eines mit wenigstens einer Authentifikationsanordnung (100) assoziierten einprägsamen Identifikationsmusters MIP umfasst,
Unterteilen (S10) des Authentifikationscode in wenigstens zwei Authentifikationssegmente (c1, c2, c3), die jeweils einen Teilsatz der Elemente des Authentifikationscode (MIP) bilden;
Encodieren (S11) jedes der Authentifikationssegmente (c1, c2, c3) mit einer Einweg-Hash-Funktion (SHA-2);
Speichern (S13) der encodierten Authentifikationssegmente ($c1u_x$, $c2u_x$, $c3u_x$) zur Verwendung bei einer Validierung;
Einholen (S30) eines Challenge-Code (OTC) vom Benutzer, wobei der Challenge-Code auf einem Muster basiert, das mit wenigstens einer Challenge-Anordnung (200) assoziiert ist, die duplizierte Zeichen (201) umfasst,
Unterteilen (S31) des Challenge-Code (OTC) in wenigstens zwei Abschnitte, die jeweils einem Authentifikationssegment (c1, c2, c3) entsprechen;
Erzeugen (S33) von Kandidatenidentifikationsmustern, die wenigstens einem Teil des Challenge-Code (OTC) entsprechen;
Encodieren (S34, S39) der Kandidatenidentifikationsmuster mit der Einweg-Hash-Funktion (SHA-2); und
Validieren (S34, S35, S39, S40) des wenigstens einen Teils des Challenge-Code (OTC), wenn wenigstens ein encodiertes Kandidatenidentifikationsmuster mit einem entsprechenden encodierten Authentifikationssegment übereinstimmt; und
Validieren (S41) des Challenge-Code (OTC) nur dann, wenn jeder Teil des Challenge-Code (OTC), der einem Authentifikationssegment entspricht, validiert ist.

13. System, das Mittel (11, 10, 2) umfasst, konfiguriert zum:

Einholen (S1, S2) eines Authentifikationscode eines Benutzers, wobei der Authentifikationscode mehrere eineutige Elemente umfasst,
Unterteilen (S10) des Authentifikationscode in wenigstens zwei Authentifikationssegmente, die jeweils einen Teilsatz der Elemente des Authentifikationscode bilden;
Encodieren (S11) jedes der Authentifikationssegmente (c1, c2, c3), so dass die Authentifikationssegmente nicht aus den Authentifikationssegmenten ($c1u_x$, $c2u_x$, $c3u_x$) abgerufen werden können; und
Speichern (S13) der encodierten Authentifikationssegmente ($c1u_x$, $c2u_x$, $c3u_x$) zur Verwendung bei einer Validierung in wenigstens einem Datensatz einer Datenbank (11),
wobei die wenigstens zwei Authentifikationssegmente in unterschiedlichen und unabhängigen Datensätzen in der Datenbank (11) gespeichert werden.

14. System, das Mittel (11, 10, 2) umfasst, die konfiguriert sind zum:

Einholen (S1, S2) eines Authentifikationscode eines Benutzers, wobei der Authentifikationscode mehrere eindeutige Elemente umfasst,

Unterteilen (S10) des Authentifikationscode in wenigstens zwei Authentifikationssegmente, die jeweils einen Teilsatz der Elemente des Authentifikationscode bilden;

Encodieren (S11) jedes der Authentifikationssegmente (c1, c2, c3), so dass die Authentifikationssegmente nicht aus den encodierten Authentifikationssegmenten ($c1u_x$, $c2u_x$, $c3u_x$) abgerufen werden können; und

Speichern (S13) der encodierten Authentifikationssegmente ($c1u_x$, $c2u_x$, $c3u_x$) zur Verwendung bei einer Validierung in wenigstens einem Datensatz einer Datenbank (11);

wobei das Encodieren (S11) jedes der Authentifikationssegmente eine Einweg-Hash-Funktion (SHA-2) mit Hilfe eines Salt benutzt, und

wobei die Authentifikationsegmente so verkettet sind, dass

ein vorheriges Authentifikationssegment ($c1u_x$) in einem ersten Datensatz der Datenbank (11) gespeichert wird, und

ein aktuelles Salt ($salt1_x$), benutzt zum Encodieren eines aktuellen Segments ($c2u_x$), das in einem zweiten Datensatz der Datenbank (11) gespeichert ist, im ersten Datensatz der Datenbank (11) zusammen mit dem vorherigen Authentifikationssegment ($c1u_x$) gespeichert wird,

so dass das vorherige Authentifikationsegment ($c1u_x$) zuvor validiert werden muss, damit das aktuelle Segment ($c2u_x$) validiert werden kann.

**15.** Computerprogramm, Computerprogrammprodukt oder computerlesbares Medium, das Befehle zum Ausführen eines Verfahrens nach einem der Ansprüche 1 bis 11 umfasst.


## Revendications

**1.** Procédé d'authentification d'un utilisateur (U), comportant les étapes consistant à :

obtenir (S1, S2) un code d'authentification d'un utilisateur, le code d'authentification comportant au moins six éléments basés sur un modèle d'identification pouvant être mémorisé, MIP, associé à au moins un agencement d'authentification (100),

diviser (S10) le code d'authentification en au moins deux segments d'authentification (c1, c2, c3) formant chacun un sous-ensemble des éléments du code d'authentification (MIP) ;

coder (S11) chacun des segments d'authentification (c1, c2, c3) au moyen d'une fonction de hachage unidirectionnelle (SHA-2) ;

stocker (S13) les segments d'authentification codés ($c1u_x$, $c2u_x$, $c3u_x$) à des fins d'utilisation lors d'une validation ;

obtenir (S30) un code de défi (OTC) auprès de l'utilisateur, le code de défi étant basé sur un modèle associé à au moins un agencement de défi (200) comportant des signes en double (201),

diviser (S31) le code de défi (OTC) en au moins deux parties, chacune correspondant à un segment d'authentification (c1, c2, c3) respectivement ;

générer (S33) des modèles d'identification candidats correspondant à au moins une partie du code de défi (OTC) ;

coder (S34, S39) les modèles d'identification candidats au moyen de la fonction de hachage unidirectionnelle (SHA-2) ; et

valider (S34, S35, S39, S40) ladite au moins une partie du code de défi (OTC) si au moins un modèle d'identification candidat codé correspond à un segment d'authentification codé correspondant ; et

valider (S41) le code de défi (OTC) uniquement si chaque partie du code de défi (OTC) correspondant à un segment d'authentification est validée.

**2.** Procédé de stockage d'un code d'authentification d'un utilisateur dans un système servant à des fins d'authentification d'un utilisateur (U), comportant les étapes consistant à :

obtenir (S1, S2) un code d'authentification d'un utilisateur, le code d'authentification comportant au moins six éléments basés sur un modèle d'identification pouvant être mémorisé, MIP, associé à au moins un agencement d'authentification (100),

diviser (S10) le code d'authentification en au moins deux segments d'authentification (c1, c2, c3) formant chacun un sous-ensemble des éléments du code d'authentification (MIP) ;

coder (S11) chacun des segments d'authentification (c1, c2, c3) au moyen d'une fonction de hachage unidirectionnelle (SHA-2) ;

stocker les segments d'authentification codés ($c1u_x$, $c2u_x$, $c3u_x$) à des fins d'utilisation lors d'une validation.

3. Procédé d'authentification d'un utilisateur au moyen d'un code d'authentification de l'utilisateur dans un système servant à des fins d'authentification de l'utilisateur (U), comportant les étapes consistant à :

obtenir (S30) un code de défi (OTC) auprès de l'utilisateur, le code de défi comportant au moins six éléments et étant basé sur un modèle associé à au moins un agencement de défi (200) comportant des signes en double (201),
diviser (S31) le code de défi (OTC) en au moins deux parties ;
générer (S33) des modèles d'identification candidats correspondant à au moins une partie du code de défi (OTC) ;
coder (S34, S39) les modèles d'identification candidats au moyen de la fonction de hachage unidirectionnelle (SHA-2) ; et
valider (S34, S35, S39, S40) ladite au moins une partie du code de défi (OTC) si au moins un modèle d'identification candidat codé correspond à un segment d'authentification codé correspondant ; et
valider (S41) le code de défi (OTC) uniquement si toutes les parties du code de défi (OTC) sont validées.

4. Procédé selon l'une quelconque des revendications 1 à 3, dans lequel le code d'authentification est divisé (S10) en segments de N éléments, avec

$$4 \leq N \leq 5 \; ;$$

ou dans lequel le code de défi est divisé (S31) en parties de N éléments, avec

$$4 \leq N \leq 5 .$$

5. Procédé selon l'une quelconque des revendications 1 à 4, dans lequel les segments et les parties correspondantes se chevauchent au moins partiellement, présentant ainsi une certaine redondance les uns parmi les autres.

6. Procédé selon l'une quelconque des revendications 1 à 5, dans lequel les segments sont chaînés, éventuellement dans lequel un sel actuel ($salt1_x$), utilisé à des fins de codage d'un segment actuel ($c2u_x$), est stocké avec un segment d'authentification précédent ($c1u_x$), de telle sorte que le segment d'authentification précédent ($c1u_x$) a besoin d'avoir été précédemment validé de telle sorte que le segment actuel ($c2u_x$) peut être traité et validé, ou dans lequel les segments ont différentes longueurs les uns par rapport aux autres, éventuellement dans lequel le premier segment est plus long par rapport aux autres segments chaînés qui suivent.

7. Procédé selon l'une quelconque des revendications 1 à 6, dans lequel ledit au moins un agencement d'authentification (100) comporte des symboles (s1, s2, s3, s4 ... s36), qui sont de préférence uniques, et dans lequel :

un code généré de manière aléatoire (s1, s2, s3 ... s36) est attribué (S1) à chaque symbole de l'agencement d'authentification ($usrmatrix_{x1}$ ; $usrmatrix_{x2}$), et
chaque code généré de manière aléatoire (s1, s2, s3 ... s36) est stocké (S2) dans une base de données (11), éventuellement dans lequel :
pour chaque segment d'authentification (c1, c2, c3) et pour chaque agencement d'authentification ($usrmatrix_{x1}$ ; $usrmatrix_{x2}$), un différent code généré de manière aléatoire ($s_1 1$, $s_1 2$, $s_1 3$ ... $s_1 36$ ; $s_2 1$, $s_2 2$, $s_2 3$ ... $s_2 36$) est attribué (S1) à chaque symbole de l'agencement d'authentification ($usrmatrix_{x1}$ ; $usrmatrix_{x2}$), de telle sorte que les segments d'authentification (c1, c2, c3) comportent chacun respectivement au moins un élément correspondant à différents agencements d'authentification ($usrmatrix_{x1}$ ; $usrmatrix_{x2}$), éventuellement dans lequel les agencements d'authentification ($usrmatrix_{x1}$ ; $usrmatrix_{x2}$) de codes générés de manière aléatoire et les segments codés correspondants ($c1u_x$, $c2u_x$) sont stockés sous la forme de différents enregistrements non corrélés dans la base de données (11), éventuellement dans lequel chaque code généré de manière aléatoire (s1, s2, s3 ... s36) a une longueur supérieure à 256 bits, afin de minimaliser la probabilité de génération du même code pour représenter différents symboles.

8. Procédé selon l'une quelconque des revendications 1 à 7, dans lequel au moins l'un parmi les suivants :

une identification d'utilisateur, et/ou un nom d'utilisateur (usr$_x$), et/ou
un sel privé (psalt) utilisé dans la fonction de hachage unidirectionnelle (SHA-2), et/ou
chaque segment d'authentification codé (c1u$_x$, c2u$_x$), et/ou
des sels cryptographiques (salt1$_x$, salt2$_x$, salt3$_x$, salt4$_x$) utilisés dans la fonction de hachage unidirectionnelle avec un nom ou une identification d'utilisateur en connexion avec les segments codés, et/ou chaque agencement d'authentification (100 ; usrmatrix$_{x1}$ ; usrmatrix$_{x2}$),
est stocké (S13) sous la forme de différents enregistrements non corrélés dans une base de données (11), ou comportant les étapes consistant à :

activer (S32, S37) l'extraction, en fonction d'une identification d'utilisateur (usr$_x$) ou au moins d'un segment d'authentification codé (c1u$_x$) :

d'au moins un agencement d'authentification (usrmatrix$_{x1}$ ; usrmatrix$_{x2}$), et
d'un segment d'authentification codé (c1u$_x$, c2u$_x$) du code d'authentification, dans lequel le segment d'authentification codé extrait (c1u$_x$, c2u$_x$) est basé sur des symboles (s$_1$1, s$_1$2, s$_1$3 ... s$_1$36 ; s$_2$1, s$_2$2, s$_2$3 ... s$_2$36) de l'agencement d'authentification extrait (usrmatrix$_{x1}$ ; usrmatrix$_{x2}$), et
générer (S33) au moins un modèle d'identification candidat en associant des signes d'une partie du code de défi à des symboles correspondants (s$_1$1, s$_1$2, s$_1$3 ... s$_1$36 ; s$_2$1, s$_2$2, s$_2$3 ... s$_2$36) de l'agencement d'authentification (usrmatrix$_{x1}$ ; usrmatrix$_{x2}$).

9. Procédé selon l'une quelconque des revendications 1 à 8, dans lequel les étapes consistant à valider (S34, S35, S39, S40) les parties du code de défi (OTC) sont effectuées de préférence de manière séquentielle, ou en parallèle, éventuellement dans lequel le code de défi est invalidé dès qu'aucune correspondance n'est trouvée pour tous les modèles d'identification candidats d'une partie du code de défi.

10. Procédé selon l'une quelconque des revendications 1 à 9, dans lequel le code d'authentification obtenu (S1, S2) est abandonné dès que les segments d'authentification codés (c1u$_x$, c2u$_x$, c3u$_x$) sont stockés (S13), ou dans lequel, si chaque agencement d'authentification (100) comporte des symboles S (s1, s2, s3, s4 ... s36), avec S $\geq$ 30, et si N est un nombre prédéterminé d'éléments dans chaque segment d'authentification, N est tel que :

$$\left(\sqrt{S}\right)^{N} < 46656,$$

ou dans lequel, si chaque agencement d'authentification (100) comporte des symboles S (s1, s2, s3, s4 ... s36), avec S $\geq$ 30, et si N est un nombre prédéterminé d'éléments dans chaque segment d'authentification, N est tel que :

$$\left(\sqrt{S}\right)^{N} \times t < 5,$$

avec t un temps, en secondes, de traitement d'une opération de codage par un processeur, au moyen d'une fonction de hachage unidirectionnelle (SHA-2).

11. Procédé selon l'une quelconque des revendications 1 à 10, dans lequel au moins un agencement d'authentification (100) et/ou au moins un agencement de défi (200) est une matrice utilisée dans une authentification de modèle de matrice, MPA, éventuellement dans lequel
chaque agencement de défi (200) a un facteur de forme carrée a, et dans lequel

$$m = n = a$$

et

$$a \geq 6$$

avec a étant une dimension linéaire de la matrice, chaque matrice ayant une taille S égale à a$^2$ éléments (201) ;
m étant le nombre de différents signes dans chaque agencement de défi (200) ; et
n étant le nombre de fois que chaque différent type de signes est reproduit dans chaque agencement de défi (200), ou éventuellement dans lequel
chaque agencement de défi a un facteur de forme carrée a, et

$$m \neq n \neq a$$

et

$$a \geq 6$$

avec a étant une dimension linéaire de la matrice, chaque matrice ayant une taille S égale à $a^2$ éléments ;
m étant le nombre de différents signes dans chaque agencement de défi ; et
n étant le nombre de fois que chaque différent type de signes est reproduit dans chaque agencement de défi, éventuellement dans lequel
chaque agencement d'authentification (100) a un facteur de forme carrée a, et dans lequel
$a \geq 6$
avec a étant une dimension linéaire de la matrice, chaque matrice ayant une taille S égale à $a^2$ éléments (101).

**12.** Système comportant des moyens (10, 2, 11) comportant un module de traitement, un moteur d'authentification et une base de données dont la configuration sert à :

obtenir (S1, S2) un code d'authentification d'un utilisateur, le code d'authentification comportant au moins six éléments basés sur un modèle d'identification pouvant être mémorisé, MIP, associé à au moins un agencement d'authentification (100),
diviser (S10) le code d'authentification en au moins deux segments d'authentification (c1, c2, c3) formant chacun un sous-ensemble des éléments du code d'authentification (MIP) ;
coder (S11) chacun des segments d'authentification (c1, c2, c3) au moyen d'une fonction de hachage unidirectionnelle (SHA-2) ;
stocker (S13) les segments d'authentification codés ($c1u_x$, $c2u_x$, $c3u_x$) à des fins d'utilisation lors d'une validation ;
obtenir (S30) un code de défi (OTC) auprès de l'utilisateur, le code de défi étant basé sur un modèle associé à au moins un agencement de défi (200) comportant des signes en double (201),
diviser (S31) le code de défi (OTC) en au moins deux parties, chacune correspondant à un segment d'authentification (c1, c2, c3) respectivement ;
générer (S33) des modèles d'identification candidats correspondant à au moins une partie du code de défi (OTC) ;
coder (S34, S39) les modèles d'identification candidats au moyen de la fonction de hachage unidirectionnelle (SHA-2) ; et
valider (S34, S35, S39, S40) ladite au moins une partie du code de défi (OTC) si au moins un modèle d'identification candidat codé correspond à un segment d'authentification codé correspondant ; et
valider (S41) le code de défi (OTC) uniquement si chaque partie du code de défi (OTC) correspondant à un segment d'authentification est validée.

**13.** Système comportant des moyens (11, 10, 2) dont la configuration sert à :

obtenir (S1, S2) un code d'authentification d'un utilisateur, le code d'authentification comportant une pluralité d'éléments uniques,
diviser (S10) le code d'authentification en au moins deux segments d'authentification formant chacun un sous-ensemble des éléments du code d'authentification ;
coder (S11) chacun des segments d'authentification (c1, c2, c3) de telle sorte que les segments d'authentification ne peuvent pas être extraits des segments d'authentification codés ($c1u_x$, $c2u_x$, $c3u_x$) ; et
stocker (S13) les segments d'authentification codés ($c1u_x$, $c2u_x$, $c3u_x$) à des fins d'utilisation lors d'une validation dans au moins un enregistrement d'une base de données (11),
dans lequel lesdits au moins deux segments d'authentification sont stockés dans des enregistrements différents et indépendants dans la base de données (11).

**14.** Système comportant des moyens (11, 10, 2) dont la configuration sert à :

obtenir (S1, S2) un code d'authentification d'un utilisateur, le code d'authentification comportant une pluralité d'éléments uniques,

diviser (S10) le code d'authentification en au moins deux segments d'authentification formant chacun un sous-ensemble des éléments du code d'authentification ;

coder (S11) chacun des segments d'authentification (c1, c2, c3) de telle sorte que les segments d'authentification ne peuvent pas être extraits des segments d'authentification codés (c1u$_x$, c2u$_x$, c3u$_x$) ; et

stocker (S13) les segments d'authentification codés (c1u$_x$, c2u$_x$, c3u$_x$) à des fins d'utilisation lors d'une validation dans au moins un enregistrement d'une base de données (11) ;

dans lequel le codage (S11) de chacun des segments d'authentification utilise une fonction de hachage unidirectionnelle (SHA-2) utilisant un sel, et

dans lequel les segments d'authentification sont chaînés de telle sorte que

un segment d'authentification précédent (c1u$_x$) est stocké dans un premier enregistrement de la base de données (11), et

un sel actuel (salt1$_x$), utilisé à des fins de codage d'un segment actuel (c2u$_x$) stocké dans un deuxième enregistrement de la base de données (11), est stocké dans le premier enregistrement de la base de données (11) le long du segment d'authentification précédent (c1u$_x$),

de telle sorte que le segment d'authentification précédent (c1u$_x$) a besoin d'avoir été précédemment validé de telle sorte que le segment actuel (c2u$_x$) peut être validé.

**15.** Programme informatique, produit programme informatique ou support lisible par un ordinateur comportant des instructions servant à effectuer le procédé selon l'une quelconque des revendications 1 à 11.

100

101

FIG. 1A

100

101

FIG. 1B

FIG. 2A

FIG. 2B

*200*

| 1 | 2 | 3 | 4 | 5 |
| 1 | 2 | 3 | 4 | 5 |—*201* |
| 1 | 2 | 3 | 4 | 5 |
| 1 | 2 | 3 | 4 | 5 |
| 1 | 2 | 3 | 4 | 5 |

## FIG. 3A

*200*                                      *201*

| A | B | C | D | E | F | A | B | C | D | E | F |

## FIG. 3B

*100*

| e1 | e2 | e3 | e4 | e5 |— S |
| e6 | e7 | e8 | e9 | e10 |
| e11 | e12 | e13 | e14 | e15 |
| e16 | e17 | e18 | e19 | e20 |
| e21 | e22 | e23 | e24 | e25 |

## FIG. 4

*FIG. 5*

*FIG. 6*

| Module divides the code into at least two segments | ~S10 |
| Module encrypts the at least two segments using one-way hashing function | ~S11 |
| Module stores the at least two segments in database | ~S13 |

*FIG. 7*

FIG. 8

S10

S101 — Module divides the code into p segment

L/N natural number?

S102 — Module augments segments having less than N elements

## FIG. 9

Module generates codes for the symbols — S1

Module stores the codes — S2

## FIG. 10

usrmatrix$_{x1}$

usrmatrix$_{x2}$

S1

C1 — | s9, s16, s23, s8 |

| s23, s28, s30, s35 | — C2

## FIG. 11

Module stores the codes as separate records — S3

Module stores at least two segments as separate records — S13

## FIG. 12

**Existing database of user's personal details**

**Data table 1**

**Data table 3**

| s1 | s2 | | | | |
|---|---|---|---|---|---|
| | | | | | |
| | | | | | |
| | | | | | |
| | | | | | |
| | | | | | s36 |

Reference Data fields

| usr$_x$ | salt1$_x$ | salt2$_x$ | #(salt1$_x$,c1u$_x$) |
|---|---|---|---|

Reference Data fields

| #(usr$_x$,psalt) | usermatrix$_{x1}$ |
|---|---|

**Data table 2**

**Data table 4**

| s1 | s2 | | | | |
|---|---|---|---|---|---|
| | | | | | |
| | | | | | |
| | | | | | |
| | | | | | |
| | | | | | |
| | | | | | s36 |

Reference Data fields

| #(usr$_x$,salt1$_x$,c1u$_x$) | salt3$_x$ | #(salt2$_x$,c2u$_x$) |
|---|---|---|

Optionally where a third MIP segment, c3 is used

| #(usr$_x$,salt2$_x$,c2u$_x$) | salt4$_x$ | #(salt3$_x$,c3u$_x$) |
|---|---|---|

Reference Data fields

| #(usr$_x$,salt2$_x$,c1u$_x$) | usermatrix$_{x2}$ |
|---|---|

| #(usr$_x$,salt4$_x$,c2u$_x$) | usermatrix$_{x3}$ |
|---|---|

*FIG. 13*

S30 — Device enables user to enter one time code

S31 — Module divides OTC into portions

S32 — Module enables authentication engine to retrieve initial authentication arrangement and initial authentication segment

S33 — Authentication engine generates initial candidate identification patterns

S34 — authentication engine encrypts and compares initial candidate identification patterns with initial authentication segment

S35 — Match found? → S50 — Authentication fails

S36 — Device processes following portion which becomes current portion

S37 — Module enables authentication engine to retrieve corresponding current authentication arrangement and current authentication segment

S38 — authentication engine generates current candidate identification patterns from current portion and current authentication arrangement

S39 — authentication engine encrypts and compares current candidate identification patterns with current authentication segment

S40 — Match found?

S41 — Authentication succeeds

*FIG. 14*

FIG. 15

**Data table 1**

**Data table 3**

| s1 | s2 |  |  |  |  |
|----|----|--|--|--|--|
|    |    |  |  |  |  |
|    |    |  |  |  |  |
|    |    |  |  |  |  |
|    |    |  |  |  |  |
|    |    |  |  |  | s36 |

Hashed username

$\#(usr_x, salt1_x, c1)$

S36

**Data table 2**

**Data table 4**

| s1 | s2 |  |  |  |  |
|----|----|--|--|--|--|
|    |    |  |  |  |  |
|    |    |  |  |  |  |
|    |    |  |  |  |  |
|    |    |  |  |  |  |
|    |    |  |  |  | s36 |

$\#(usr_x, salt2_x, c1)$

S37

Correct matrix symbol set $usermatrix_{x1}$

S32

| s1 | s2 |  |  |  |  |
|----|----|--|--|--|--|
|    |    |  |  |  |  |
|    |    |  |  |  |  |
|    |    |  |  |  |  |
|    |    |  |  |  |  |
|    |    |  |  |  | s36 |

Private salt

#

usr_x

$\#(c1u_x)$

salt1_x

salt2_x

Current challenge grid

**Challenge grid generator**

| 1 | 1 | 0 | 2 | 3 | 3 |
|---|---|---|---|---|---|
| 0 | 4 | 5 | 1 | 1 | 0 |
| 2 | 1 | 5 | 2 | 1 | 3 |
| 3 | 3 | 5 | 2 | 4 | 0 |
| 2 | 0 | 4 | 3 | 4 | 0 |
| 2 | 5 | 4 | 4 | 5 | 5 |

2

Current challenge grid

S33,S34

S35

1st stage comparator

✓

y1 .. y4 match c1?

✗    ✗

S37

$\#(c2u_x)$

salt3_x

2nd stage comparator

S40

y_a .. y_b match c2?

✓

S40

Correct matrix symbol set $usermatrix_{x2}$ for c2

| s1 | s2 |  |  |  |  |
|----|----|--|--|--|--|
|    |    |  |  |  |  |
|    |    |  |  |  |  |
|    |    |  |  |  |  |
|    |    |  |  |  |  |
|    |    |  |  |  | s36 |

If n>8

**User input** 3

User enters username and one time code (OTC)

S30

y1, y2, y3.....yn

OTC entered by user

S50

**Authentication failed**

S38,S39

**Authentication successful**

S41

EP 2 883 183 B1

FIG. 16

*FIG. 17*

*FIG. 18*

FIG. 19

FIG. 20

**EP 2 883 183 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0227442 A2